(19) Europäisches Patentamt
European Patent Office
Office européen des brevets

(11) **EP 4 518 204 A1**

(12) **EUROPEAN PATENT APPLICATION**
published in accordance with Art. 153(4) EPC

(43) Date of publication:
**05.03.2025 Bulletin 2025/10**

(21) Application number: **23796727.8**

(22) Date of filing: **24.04.2023**

(51) International Patent Classification (IPC):
**H04L 1/00** (2006.01)   **H04L 5/00** (2006.01)
**H04W 72/23** (2023.01)   **H04W 72/04** (2023.01)

(52) Cooperative Patent Classification (CPC):
**H04L 1/00; H04L 5/00; H04W 72/04; H04W 72/23**

(86) International application number:
**PCT/KR2023/005525**

(87) International publication number:
**WO 2023/211080 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.04.2022 US 202263335233 P
11.08.2022 KR 20220100688**

(71) Applicant: **LG Electronics Inc.**
**Yeongdeungpo-gu**
**Seoul 07336 (KR)**

(72) Inventors:
• **AHN, Seungjin**
  **Seoul 06772 (KR)**
• **YANG, Suckchel**
  **Seoul 06772 (KR)**
• **KIM, Seonwook**
  **Seoul 06772 (KR)**
• **CHOI, Seunghwan**
  **Seoul 06772 (KR)**

(74) Representative: **Plasseraud IP**
**104 Rue de Richelieu**
**CS92104**
**75080 Paris Cedex 02 (FR)**

(54) **DEVICE AND METHOD FOR PERFORMING MULTI-CARRIER SCHEDULING IN WIRELESS COMMUNICATION SYSTEM**

(57)   The present disclosure is to perform multi-carrier scheduling in a wireless communication system, a method of operating a user equipment (UE) may include performing an access procedure with a base station, performing a connection establishment procedure for a primary cell with the base station, performing a connection establishment procedure for at least one secondary cell with the base station, receiving downlink control information (DCI) from the base station and receiving data using resources indicated by the DCI.

FIG. 15

**Description**

Technical Field

The following description relates to a wireless communication system, and to a device and method for performing multi-carrier scheduling in a wireless communication system.

Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

Disclosure

Technical Problem

The present disclosure may provide a device and method for more effectively allocating resources in a wireless communication system.

The present disclosure may provide a device and method for performing multi-carrier scheduling in a wireless communication system.

The present disclosure may provide a device and method for allocating resources for a plurality of cells using a physical downlink control channel (PDCCH) of one cell in a wireless communication system supporting carrier aggregation.

The present disclosure may provide a device and method for performing scheduling for a physical downlink shared channel (PDSCH) or a physical uplink shared channel (PUSCH) of a plurality of cells using a PDCCH of one cell in a wireless communication system supporting carrier aggregation.

The present disclosure may provide a device and method for transmitting and receiving DCI (downlink control information) including scheduling information for a plurality of cells through a PDCCH of one cell in a wireless communication system.

The present disclosure may provide a device and method for configuring an FDRA (frequency domain resource allocation) field including scheduling information for a plurality of cells in a wireless communication system supporting carrier aggregation.

The present disclosure may provide a device and method for allocating frequency domain resources for a plurality of cells based on an RB (resource block) of a reference cell among a plurality of cells for carrier aggregation in a wireless communication system.

The present disclosure may provide a device and method for allocating frequency domain resources for a plurality of cells based on a difference between an RB of a reference cell among a plurality of cells for carrier aggregation and RBs of other cells in a wireless communication system.

The present disclosure may provide a device and method for allocating frequency domain resources of a plurality of cells based on BWP (bandwidth part) of a plurality of cells for carrier aggregation in a wireless communication system.

The present disclosure may provide a device and method for dividing a plurality of cells for carrier aggregation into a plurality of cell groups and indicating frequency domain resources through a PDCCH of one cell for each cell group in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

Technical Solution

As an example of the present disclosure, a method of operating a user equipment (UE) in a wireless communication system may include performing an access procedure with a base station, performing a connection establishment procedure for a primary cell with the base station, performing a connection establishment procedure for at least one secondary cell with the base station, receiving downlink control information (DCI) from the base station, and receiving data using resources indicated by the DCI. The DCI may include information indicating resources allocated in a plurality of cells including the primary cell and the at least one secondary cell and information indicating at least one cell that is not actually scheduled among the primary cell and the at least one secondary cell.

As an example of the present disclosure, a method of operating a base station in a wireless communication system may include performing an access procedure with a user equipment (UE), performing a connection establishment procedure for a primary cell of the UE, performing a connection establishment procedure for at least one secondary cell of the UE, transmitting downlink control information (DCI) to the UE, and transmitting data using resources indicated by the DCI. The DCI may include information indicating resources allocated in a plurality of cells including the primary cell and the at least one secondary cell and information indicating at least one cell that is not actually scheduled among the primary cell and the at least one secondary cell.

As an example of the present disclosure, a user equipment (UE) in a wireless communication system may include a transceiver and a processor connected to the transceiver. The processor may perform an access procedure with a base station, perform a connection establishment procedure for a primary cell with the base station, perform a connection establishment procedure for at least one secondary cell with the base station, receive downlink control information (DCI) from the base station and receive data using resources indicated by the DCI. The DCI may include information indicating resources allocated in a plurality of cells including the primary cell and the at least one secondary cell and information indicating at least one cell that is not actually scheduled among the primary cell and the at least one secondary cell.

As an example of the present disclosure, a base station in a wireless communication system may include a transceiver and a processor connected to the transceiver. The processor may perform an access procedure with a user equipment (UE), perform a connection establishment procedure for a primary cell of the UE, perform a connection establishment procedure for at least one secondary cell of the UE, transmit downlink control information (DCI) to the UE and transmit data using resources indicated by the DCI. The DCI may include information indicating resources allocated in a plurality of cells including the primary cell and the at least one secondary cell and information indicating at least one cell that is not actually scheduled among the primary cell and the at least one secondary cell.

As an example of the present disclosure, a communication apparatus may include at least one processor and at least one computer memory connected to the at least one processor to store instructions directing operations when executed by the at least one processor. The operations may include performing an access procedure with a base station, performing a connection establishment procedure for a primary cell with the base station, performing a connection establishment procedure for at least one secondary cell with the base station, receiving downlink control information (DCI) from the base station and receiving data using resources indicated by the DCI. The DCI may include information indicating resources allocated in a plurality of cells including the primary cell and the at least one secondary cell and information indicating at least one cell that is not actually scheduled among the primary cell and the at least one secondary cell.

As an example of the present disclosure, a non-transitory computer-readable medium storing at least one instruction may include the at least one instruction executable by a processor. The at least one instruction may instruct a device to perform an access procedure with a base station, perform a connection establishment procedure for a primary cell with the base station, perform a connection establishment procedure for at least one secondary cell with the base station, receive downlink control information (DCI) from the base station and receive data using resources indicated by the DCI. The DCI may include information indicating resources allocated in a plurality of cells including the primary cell and the at least one secondary cell and information indicating at least one cell that is not actually scheduled among the primary cell and the at least one secondary cell.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

Advantageous Effects

As is apparent from the above description, the embodiments of the present disclosure have the following effects.

According to the present disclosure, scheduling for a plurality of cells can be performed efficiently.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 illustrates an example of a structure of a wireless communication system to which the present disclosure may be applied.
FIG. 2 illustrates an example of a wireless device applicable to the present disclosure.
FIG. 3 illustrates a frame structure in a wireless communication system to which the present disclosure may be applied.
FIG. 4 illustrates an example of a resource grid in a wireless communication system to which the present disclosure may be applied.
FIG. 5 illustrates an example of a physical resource block in a wireless communication system to which the present disclosure may be applied.
FIG. 6 illustrates an example of a slot structure in a wireless communication system to which the present disclosure may be applied.
FIG. 7 illustrates examples of physical channels used in a wireless communication system, to which the present disclosure may be applied, and an example of a general signal transmission and reception method using the physical channels.
FIG. 8 illustrates an example of an FDRA method based on a maximum number of RB(G)s in a wireless communication system according to an embodiment of the present disclosure.
FIG. 9 illustrates an example of an FDRA method based on a minimum number of RB(G)s in a wireless communication system according to an embodiment of the present disclosure.
FIG. 10 illustrates an example of a shared-common FDRA bit information configuration method in a wireless communication system according to an embodiment of the present disclosure.
FIG. 11 illustrates an example of a cell group for multi-carrier physical downlink control channel (PDCCH) scheduling in a wireless communication system according to an embodiment of the present disclosure.
FIG. 12 illustrates an example of a separate-delta FDRA information configuration in a wireless communication system according to an embodiment of the present disclosure.
FIG. 13 illustrates an example of a procedure in which a base station performs communication according to multi-carrier scheduling in a wireless communication system according to an embodiment of the present disclosure.
FIG. 14 illustrates an example of a procedure in which a terminal performs communication according to multi-carrier scheduling in a wireless communication system according to an embodiment of the present disclosure.
FIG. 15 illustrates an example of a procedure for indicating whether to perform scheduling for each cell using FDRA information in a wireless communication system according to an embodiment of the present disclosure.
FIG. 16 illustrates an example of a procedure for performing multi-carrier scheduling according to a shared-common method in a wireless communication system according to an embodiment of the present disclosure.
FIG. 17 illustrates an example of a procedure for performing multi-carrier scheduling according to a separate-delta method in a wireless communication system according to an embodiment of the present disclosure.
FIG. 18 illustrates an example of a procedure for performing multi-carrier scheduling according to a separate-equal method in a wireless communication system according to an embodiment of the present disclosure.

Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.
In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. ABS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial intelligence/machine learning (AI/ML), but may not be limited thereto.

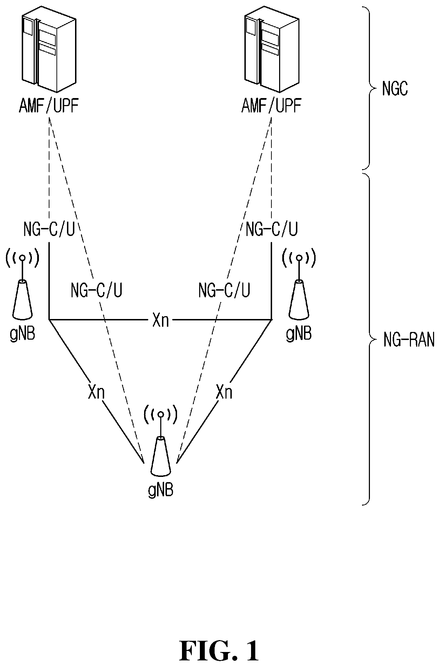

FIG. 1 exemplifies a structure of a wireless communication system to which the present disclosure may be applied. Referring to FIG. 1, NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

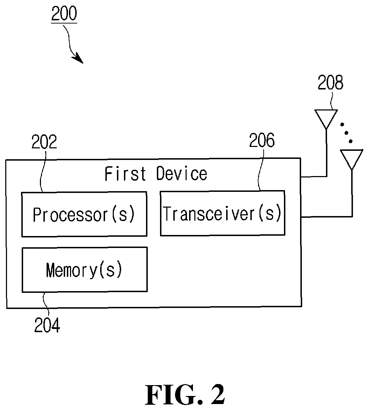

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. **In** addition, the at least one processor 202 may control the at least one transceiver 206 to receive user data, control information, or a radio signal from at least one other device. **In** addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. **In** this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

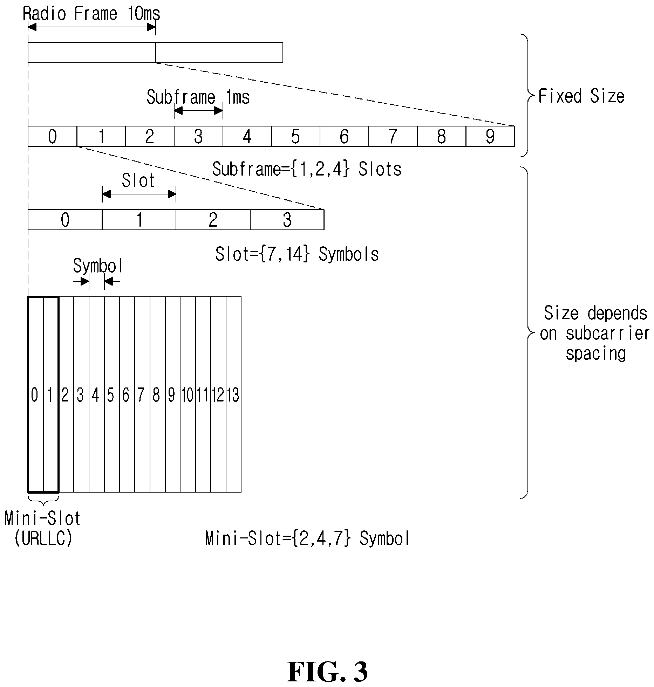

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or $\mu$). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu} \cdot 15[kHz]$ | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise.

An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f=1/(\Delta f_{max} \cdot N_f/100)T_c = 10$ ms. Here, the radio frame is configured with 10 subframes having a duration of $T_{sf}=(\Delta f_{max} \cdot N_f/1000)T_c = 1$ ms, respectively. In this case, there may be one set of frames for an uplink and one set of frames for a downlink. In addition, transmission in an uplink frame No. i from a terminal should start earlier by $T_{TA}=(N_{TA} +N_{TA,offset})T_c$ than a corresponding downlink frame in a corresponding terminal starts. For a subcarrier spacing configuration $\mu$, slots are numbered in an increasing order of $n_s^{\mu} \in \left\{ 0,\cdots,N_{slot}^{subframe,\mu} -1 \right\}$ in a subframe and are numbered in an increasing order of $n_{s,f}^{\mu} \in \left\{ 0,\cdots,N_{slot}^{frame,\mu} -1 \right\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that not all OFDM symbols of a downlink slot or an uplink slot are available.

Table 3 represents the number of OFDM symbols per slot $(N_{symb}^{slot})$, the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on $\mu=2$ (SCS is 60 kHz), and referring to Table 3, 1 subframe may include 4 slots. 1 subframe={1,2,4} slot shown in FIG. 3 is an example, and the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

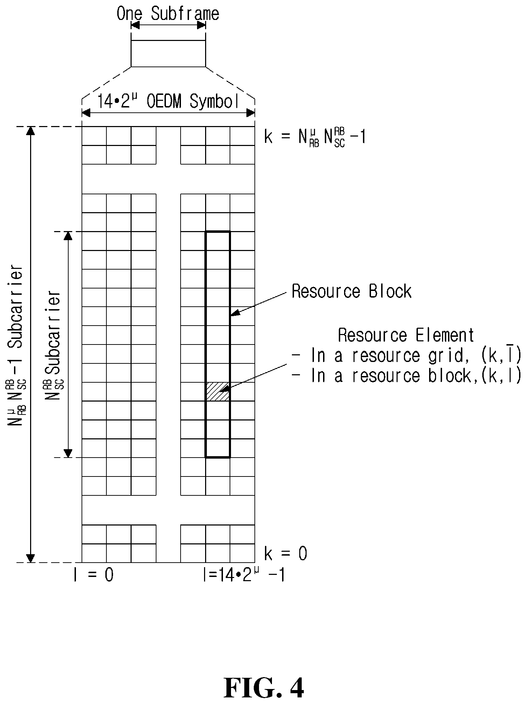

FIG. 4 exemplifies a resource grid in a wireless communication system to which the present disclosure may be applied.

Referring to FIG. 4, as an illustrative description, a resource grid is configured with $N_{RB}^{\mu} N_{SC}^{RB}$ subcarriers in a frequency domain, and one subframe is configured with $14 \cdot 2^{\mu}$ OFDM symbols, but the resource grid and the subframe are not limited thereto. In an NR system, a transmitted signal is described by one or more resource grids configured with $2^{\mu} N_{symb}^{(\mu)}$ OFDM symbols and $N_{RB}^{\mu} N_{SC}^{RB}$ subcarriers. Here, $N_{RB}^{\mu} \leq N_{RB}^{\max,u}$. The $N_{RB}^{\max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l'). Here, $k = 0, \ldots, N_{RB}^{\mu} N_{SC}^{RB} - 1$ is an index in a frequency domain and $l' = 0, \ldots, 2^{\mu} N_{symb}^{(\mu)} - 1$ refers to a position of a symbol in a subframe. When referring to a resource element in a slot, an index pair (k, l) is used. Here, $l = 0, \ldots, 2^{\mu} N_{symb}^{(\mu)} - 1$ A resource element (k, l') for $\mu$ and an antenna port p corresponds to a complex value, $a_{k,f}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB} = 12$ consecutive subcarriers in a frequency domain.

Point A plays a role as a common reference point of a resource block grid and is obtained as follows.

**[0075]** - offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.

**[0076]** - absoluteFrequencyPointA represents a frequency-position of point A expressed as in an absolute radio-frequency channel number (ARFCN).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k, l) for a subcarrier spacing configuration $\mu$ in a frequency domain is given as in the following Equation 1.

$$[\text{Equation 1}]$$

$$n_{CRB}^{\mu} = \left\lfloor \frac{k}{N_{sc}^{RB}} \right\rfloor$$

In Equation 1, k is defined relatively to point A so that k=0 corresponds to a subcarrier centering around point A. Physical resource blocks are numbered from 0 to $N_{BWP,i}^{size,\mu} - 1$ in a bandwidth part (BWP) and i is the number of a BWP. A relationship between a physical resource block $n_{PRB}$ and a common resource block $n_{CRB}$ in BWP i is given by the following

Equation 2.

[Equation 2]

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

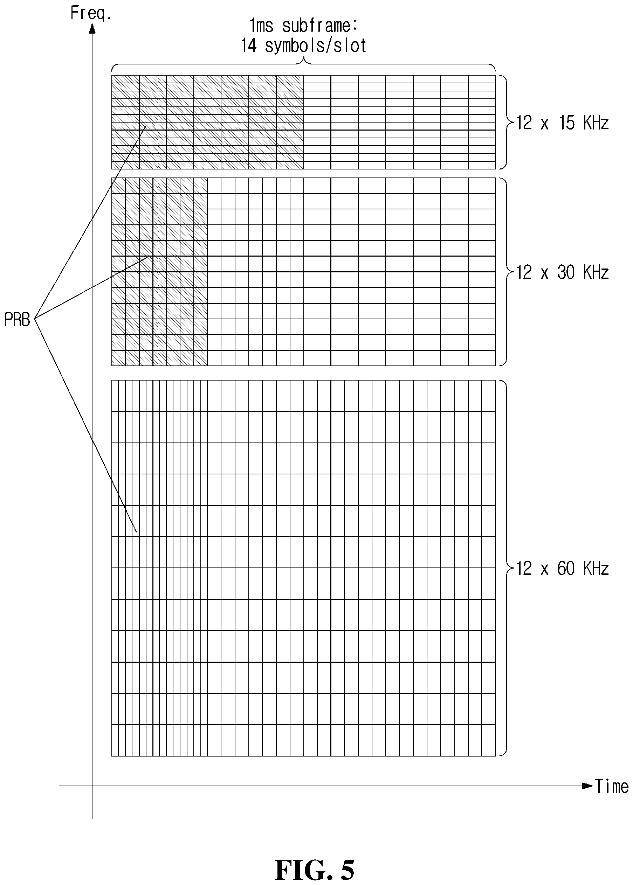

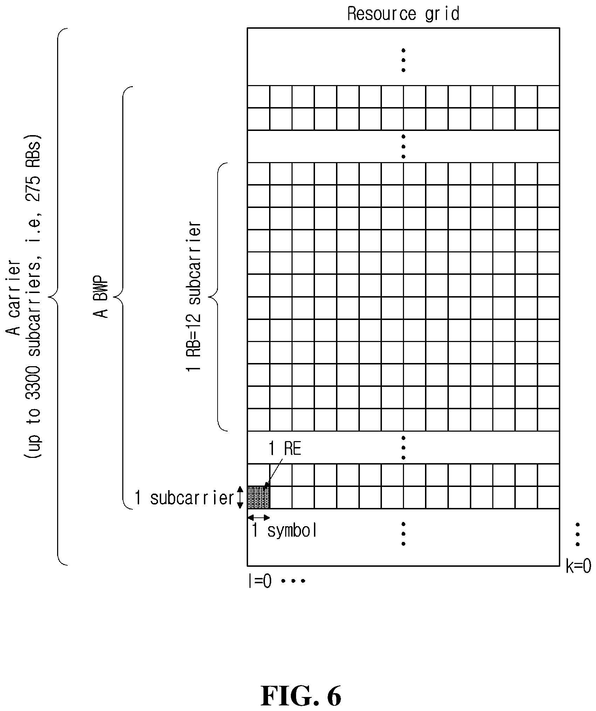

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6, a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

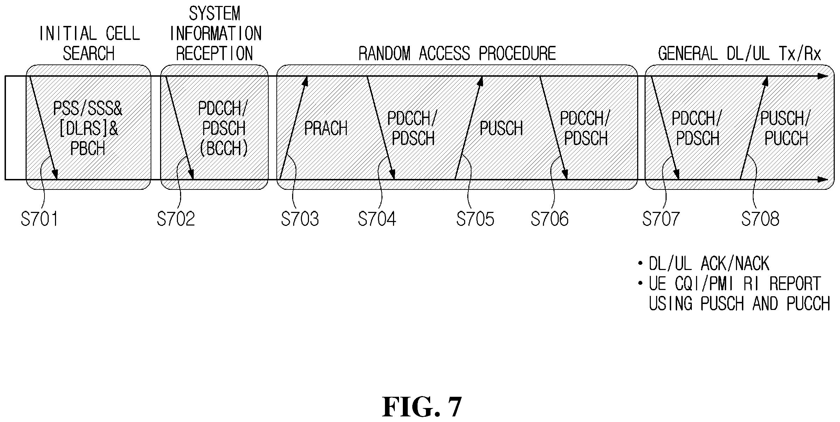

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

Concrete Embodiments of the Present Disclosure

Hereinafter, the present disclosure describes a technique for simultaneously controlling a plurality of cells using a single physical downlink control channel (PDCCH) in a base station supporting carrier aggregation (CA). Specifically, the present disclosure describes various embodiments in which a base station controls scheduling for data transmission of a physical downlink shared channel (PDSCH) of a plurality of cells through a single PDCCH. The plurality of cells may include at least one of a primary cell (Pcell), a secondary cell (Scell), a secondary-secondary cell (secondary Scell or sScell), or a primary-secondary cell (primary Scell (primary Scell or pScell).

5G NR (new radio) is a technology that mainly provides services through main technologies such as eMBB (enhanced mobile broadband), URLLC (ultra-reliable low-latency communications), and mMTC (massive machine-type communication). eMBB is a technology that mainly focuses on speed improvement, and transmits a lot of information by expanding the spectrum from LTE (long term evolution). eMBB is an important frequency aggregation technology that is widely used in 5G NR.

Currently, 5G NR is based on the principle that the PDCCH of a cell performs scheduling for a PDSCH responsible for data transmission for the cell on a cell-by-cell basis. That is, the base station generally has to perform one scheduling through the PDCCH to trigger one PDSCH transmission. In addition, in a carrier aggregation situation, that is, a situation in which data throughput is improved from an eMBB perspective by transmitting the PDSCH through a plurality of cells, the base station has to inform the terminal of scheduling information through the PDCCH for each cell, for simultaneous transmission of the PDSCH through the plurality of cells. This is a basic operation performed since 4G LTE.

However, as the number of frequency bands that can be supported in 5G NR increases, the number of cells used for carrier aggregation in 5G NR may be greater than the number of cells used for carrier aggregation in LTE. Therefore, if the existing method of performing scheduling on a cell-by-cell basis through the PDCCH in 5G NR is applied without change, the terminal consumes a lot of resources to decode scheduling information. Therefore, if the existing method of performing scheduling on a cell-by-cell basis through the PDCCH in 5G NR is applied without change, the terminal consumes a lot of resources to decode scheduling information.

Therefore, the present disclosure proposes a method of performing PDSCH scheduling of a plurality of cells using a single PDCCH in one cell. In particular, the present disclosure proposes a technique for indicating frequency allocation for PDSCHs of a plurality of cells in a single PDCCH information for a specific cell, in order to transmit PDSCH scheduling information of a plurality of cells to a terminal.

FDRA (frequency domain resource allocation) that indicates frequency allocation within the PDCCH is the field that uses the most bits among various fields in the PDCCH. Therefore, when indicating frequency allocation for a plurality of cells, as many as bits as multiples of a plurality of cells are used, which may cause a problem in that the amount of information of the PDCCH increases excessively. Currently, the minimum transmission payload of the PDCCH is 140 bits, but since the minimum transmission payload of the PDCCH in 5G NR is more than 140 bits, it is impossible in principle to operate FDRA for a plurality of cells. Therefore, for a plurality of cells, instead of using as many as bits as multiples of a plurality of cells in a single PDCCH, the L2 MAC (media access control) CE (control element) that has fewer restrictions on the payload size may be utilized. Alternatively, it is possible to transmit FDRA information indications for a plurality of cells to a terminal in a manner that minimizes the increase in the number of bits in one FDRA by sharing common features within the existing layer 1 PDCCH. Accordingly, it is expected to solve the problem of performance degradation due to PDCCH decoding of the terminal in eMBB and increase the usability of resource elements.

Hereinafter, the present disclosure describes a method of performing simultaneous scheduling for PDSCH transmission of a plurality of cells using a single PDCCH for a specific cell in a carrier aggregation situation. Specifically, the present disclosure will describe a method of expressing FDRA information for a plurality of cells with a small amount of information or a small number of bits by utilizing a commonly shareable feature rather than using an amount of information or a number of bits as multiples of cells for frequency allocation-related information called FDRA in a PDCCH. That is, the present disclosure will describe a method of indicating an FDRA field to express FDRA information for a plurality of cells in a single PDCCH.

In general, the size of FDRA is about 14 to 18 bits, and the size of FDRA may vary depending on the frequency band or bandwidth. When the size of FDRA is 18 bits, in a carrier aggregation situation, when allocating frequencies for a plurality of cells using FDRA in one PDCCH, the number of bits (e.g., 72 bits) corresponding to 18 bits × the number of scheduling cells (e.g., 4 CCs (component carriers)) is required. In this case, a situation may occur where the FDRA field, which is one of dozens of fields transferred through the PDCCH, occupies about 50% or more of the total available payload size of 140 bits of the PDCCH. Therefore, it may be impossible to schedule PDSCHs for a plurality of cells in a single PDCCH in a manner of using the existing FDRA. Accordingly, the present disclosure will propose various techniques that enable PDSCH scheduling for a plurality of cells (e.g., 4 CCs) using much fewer bits than the aforementioned number of bits. In the proposed techniques, depending on which method is selectively applicable with respect to FDRA, how the DCI (downlink control information) field information of the PDCCH is applied to the scheduled CC may be distinguished.

[Table 5] shows the characteristics of fields in a PDCCH for multi-CC scheduling. [Table 5] shows seven processing methods.

[Table 5]

| No. | Processing method according to field | Description |
|---|---|---|
| 1 | Shared-reference-CC | This is a method in which a value indicated by the DCI field is applied only to a specific reference CC, and a specific default value is applied to the remaining CCs. The reference CC may be a DCI scheduling CC, a CC with the lowest index, or a CC pointed by the CIF (carrier indicator field). |
| 2 | Shared-single-CC | This is a method in which the DCI field is present only when there is only one scheduled CC, and is omitted when there are multiple scheduled CCs. |
| 3 | Shared-table-extension | This is a method in which each row of the table indicated by the DCI field is composed of a combination of information about a plurality of CCs. |
| 4 | Shared-common | This is a method in which the value indicated by the DCI field is applied commonly to all scheduled CCs. |
| 5 | separate-equal | This is a method in which DCI fields with the same size are individually configured for each scheduled CC/TB. |
| 6 | separate-delta | This is a method in which the DCI field is configured individually for each scheduled CC/TB, but only full information is indicated for a specific reference CC/TB, and delta information indicating the difference compared to the full information is indicated for the remaining CCs. |
| 7 | Omit | This is a method in which the DCI field itself is omitted. |

Hereinafter, the present disclosure proposes various option methods using the following processing methods, for the FDRA field among several fields in the PDCCH.

   1) Option-1: Shared-common

-   A method of applying one FDRA information to a plurality of CCs or cells

   2) Option-2: Separate-delta

-   Bitmap (resource allocation type 0): A method of adding or subtracting some RBGs (resource block groups) based on reference information
-   RIV (resource indication value) (resource allocation type 1): A method of indicating a difference in the length value of RIV based on reference information

3) Option-3: separate-equal

- A method of determining the size of FDRA based on the number of CCs (Component Carriers or Cells) scheduled.

4) Option-4: omit

In the present disclosure, for the purpose of reducing DCI overhead required for scheduling PDSCH and/or PUSCH (physical downlink shared channel) in a carrier aggregation situation where a plurality of cells are configured, a multi-cell scheduling method that simultaneously schedules a plurality of serving cells and/or CCs and PDSCH/PUSCH transmissions through them with a single DCI may be considered based on the justification shown in Table 6 below of Rel-18.

[Table 6]

| NR supports a wide range of spectrum in different frequency ranges. It is expected that there will be increasing availability of spectrum in the market for 5G Advanced possibly due to re-farming from the bands originally used for previous cellular generation networks. Especially for low frequency FR1 bands, the available spectrum blocks tend to be more fragmented and scattered with narrower bandwidth. For FR2 bands and some FR1 bands, the available spectrum can be wider such that intra-band multi-carrier operation is necessary. To meet different spectrum needs, it is important to ensure that these scattered spectrum bands or wider bandwidth spectrum can be utilized in a more spectral/power efficient and flexible manner, thus providing higher throughput and decent coverage in the network. |
| --- |
| One motivation is to increase flexibility and spectral/power efficiency on scheduling data over multiple cells including intra-band cells and inter-band cells. The current scheduling mechanism only allows scheduling of single cell PUSCH/PDSCH per a scheduling DCI. With more available scattered spectrum bands or wider bandwidth spectrum, the need of simultaneous scheduling of multiple cells is expected to be increasing. To reduce the control overhead, it is beneficial to extend from single-cell scheduling to multi-cell PUSCH/PDSCH scheduling with a single scheduling DCI. Meanwhile, trade-off between overhead saving and scheduling restriction has to be taken into account. |

Hereinafter, the present disclosure describes various embodiments for the configuration and interpretation of the FDRA field in the DCI, for the structural design of the DCI, i.e., the MC-DCI (multi-cell DCI), that performs the multi-cell scheduling as described above. The multi-cell scheduling operation for PDSCH transmission or PUSCH transmission described in the present disclosure may be applied identically or similarly to multi-cell scheduling for PUSCH transmission or PDSCH transmission, respectively. In addition, in the present disclosure, a CC (component carrier) may be understood as an active bandwidth part (active BWP), a cell, etc. set and/or indicated to the CC. In the present disclosure, a scheduled CC may be referred to as a co-scheduled CC. In addition, in the present disclosure, when cell grouping is performed for a plurality of cells included in the scheduled CCs, one group may be referred to as a cell subgroup.

Hereinafter, the present disclosure proposes several options that enable PDSCH scheduling for a plurality of CCs by efficiently utilizing the minimum number of bits without increasing the DCI field of the PDCCH for multi-carrier scheduling by a multiple of CCs in the DCI field structure of the conventional PDCCH in which the FDRA field per CC occupies 13 to 18 bits. In this case, the following multiple basic operations may be assumed. The basic operations according to various embodiments of the present disclosure are as follows.

A. A group of CCs, i.e., a subset, that will share information of FDRA may be determined in advance at a higher layer (e.g., RRC layer or MAC layer). For example, a group of CCs may be determined by intra-band CCs, inter-band CCs, same sub-carrier spacing (SCS), or resource allocation (RA) type.

B. For multiple options, the basic information of the shared FDRA may be provided semi-statically from the MAC layer and may be pre-configured in advance in the RRC layer. In addition, delta information or additional information of the information may be indicated using DCI.

C. In the present disclosure, the maximum number of CCs that can be scheduled simultaneously is not limited in principle. However, hereinafter, for the convenience of description, the present disclosure assumes that the maximum number of CCs is 4. However, the present disclosure can be equally applied even when the number of CCs is 4 or more. In addition, the maximum number of CCs that can be scheduled for downlink and uplink is the same.

D. If the base station is operable, the base station may inform the terminal of which options to use depending on the situation through RRC signaling. Therefore, if the number of CCs is tens, the base station may consider grouping the CCs by each option.

E. In the present disclosure, the entire bandwidth of the CC may be used as RBs or RBGs, but if a BWP (bandwidth part) is set, RBs or RBGs may be used in the corresponding BWP range.

F. In the present disclosure, CIF may be mainly used to indicate the validity of a cell or a cell group or the number of cells. In the present disclosure, a separate field named XXX may be defined based on the CIF, and the size of the field may be 3 bits or more. In the present disclosure, the validity of a cell or a cell group is related to whether a resource is allocated to the cell or the cell group through MC-DCI, and a state in which a resource is allocated may be expressed as valid. In addition, in the present disclosure, a state in which a resource is allocated may be expressed as an 'actually scheduled' state.

### 1. Option-1: Shared-common FDRA bit information configuration

The shared-common FDRA bit information configuration method is a method in which FDRA information and/or values indicated by one FDRA field are commonly applied to a plurality of cells by configuring only one FDRA field in the DCI for the plurality of cells scheduled through the same MC-DCI. In this way, when multiple carriers or cells share the same FDRA field, i.e., FDRA information and/or values indicated by the FDRA field, the FDRA field and/or FDRA information may be configured and/or indicated by considering different bandwidths and/or different sub-carrier spacings (SCS) of the plurality of cells. For example, the information of the FDRA field may be configured and/or indicated based on the number of RB(G)s of a cell having the maximum or minimum number of RB(G)s among scheduled CCs, or on the number of RB(G)s of a specific reference cell. In the present disclosure, RB(G) means RB (resource block) or RBG (resource block group). That is, the criterion for determining the maximum/minimum bandwidth may be the number of RBs or the number of RBGs in the BWP per CC that is actually scheduled and is determined based on the SCS, rather than the size of the BWP. Based on the shared-common FDRA bit information configuration method, the FDRA field in the MC-DCI may be configured for each cell subgroup belonging to a co-scheduled cell set. That is, one FDRA field is configured for each cell subgroup, and a value indicated by the FDRA field may be commonly applied to cells belonging to the corresponding cell subgroup. At this time, the FDRA field and/or FDRA information for each cell subgroup may be configured and/or indicated based on the number or size of RB(G)s of a cell in which a maximum number of RB(G)s is set, a cell in which a minimum number of RB(G)s is set or a specific reference cell among cells belonging to the corresponding cell subgroup, the co-scheduled cell set to which the cell subgroup belongs or the entire scheduled cell set.

According to one embodiment of the present disclosure, if a specific reference cell is determined and/or set within each cell subgroup or co-scheduled cell set, the reference cell changes at every scheduling time point. In this case, adaptive and/or efficient resource allocation is possible, but the complexity of the terminal that must reconfigure and reinterpret the FDRA field and/or information and match the retransmission TB size may increase.

According to one embodiment of the present disclosure, if a specific reference cell is determined and/or set within the entire set of scheduling cells, the reference cell is fixed without changing at each scheduling time point. In this case, the efficiency of resource allocation is somewhat reduced, but since the configuration and interpretation of the FDRA field and/or information are the same and it is easy to match the retransmission TB size, the increase in complexity of the terminal can be minimized.

According to one embodiment of the present disclosure, if only one cell is scheduled via MC-DCI, exceptionally, the one cell is determined as a reference cell. In this case, the FDRA field and/or FDRA information may be configured and/or indicated based on the number and/or size of RB(G)s set for the corresponding cell.

According to one embodiment of the present disclosure, if FDRA information indicated for a specific cell subgroup via MC-DCI is invalid, the terminal may operate to perform PDSCH/PUSCH transmission and reception under a state in which it is considered or assumed that there is no scheduling information for all cells belonging to the corresponding cell subgroup. The case in which FDRA information is invalid may include a case in which all bits of a bitmap are indicated as '0', or a case in which all bits of a RIV are indicated as 1.

### 1-1. Cell-based FDRA method with maximum number of RB(G)s based on BWP

The FDRA field and/or the FDRA information may be configured and/or indicated based on the maximum number $N\_max$ of RB(G)s among the numbers of RB(G)s set for cells scheduled through the same MC-DCI. For example, if the number of RB(G)s on a specific reference cell is the maximum among the numbers of RB(G)s of cells scheduled through the same MC-DCI, the FDRA field and/or the FDRA information may be configured and/or indicated based on the number and/or size of RB(G)s set for the specific reference cell. Here, the cells scheduled through the same MC-DCI may mean cells belonging to a co-scheduled cell set, a cell subgroup belonging to a co-scheduled cell set, or the entire scheduling cell set. At this time, for a cell in which $N\_less$ RB(G)s are set which are less than $N\_max$, the RB(G) allocation information indicated and/or allocated for the first $N\_less$ RB(G) indices among the RB(G)s indicated by the FDRA field may be used as information on the $N\_less$ RB(G) index areas of the corresponding cell. That is, when the FDRA field indicating whether to allocate RB(G)s of indices 0 to $N\_max-1$ is applied to a cell set with $N\_less$ RB(G)s, the information on the RB(G)s of indices 0 to $N\_less-1$ is used, and the information on the RB(G)s of indices $N\_less$ to $N\_max-1$ is not used. The method of configuring the FDRA field and/or the FDRA information based on the maximum number N_max of RB(G)s as described above may be referred to as "FDRA based on the maximum number of RB(G)s, or max-based FDRA" for convenience of explanation.

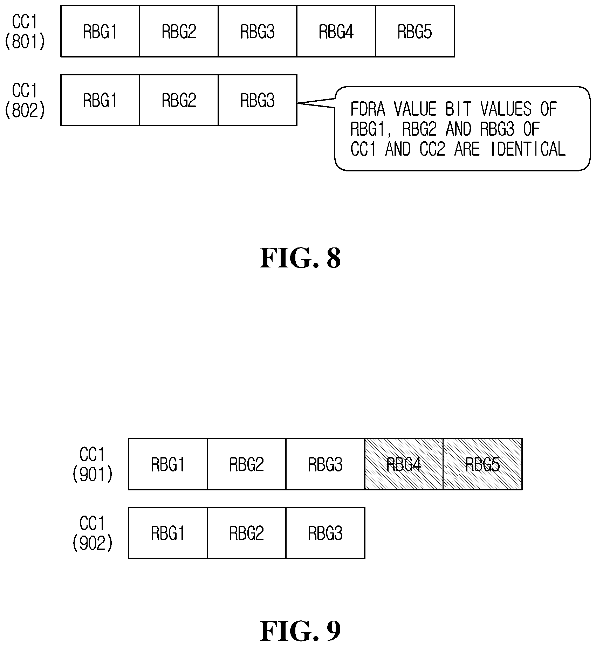

FIG. 8 illustrates an example of an FDRA method based on a maximum number of RB(G)s in a wireless communication system according to an embodiment of the present disclosure. For convenience of explanation, FIG. 8 illustrates a case where two CCs are included in one cell subgroup. However, the FDRA method based on a maximum number of RB(G)s described in FIG. 8 may also be applied to a case where three or more CCs are included in a cell subgroup.

Referring to FIG. 8, CC1 801 and CC2 802 may be set as one cell subgroup scheduled through the same MC-DCI. In FIG. 8, since the number of RBGs of CC1 801 is greater than that of CC2 802, the FDRA field and/or FDRA information may be configured based on the number or size of RBGs of CC1 801. For example, the information of the FDRA field may indicate only information about CC1 801. At this time, for frequency resource allocation for CC2 801, no additional bit allocation is required in the FDRA field, and values for RBGs of lower indices among the information about CC1 801 may be reused. In this way, when the FDRA information configured based on the maximum number N_max of RB(G)s is reused in another CC within the cell subgroup, the cell subgroup may be set by the higher RRC layer or MAC layer, or may be changed semi-statically.

1-2. Cell-based FDRA method with minimum number of RB(G)s based on BWP

The FDRA field and/or the FDRA information may be configured and/or indicated based on the minimum number N_min of RB(G)s among the number of RB(G)s set for cells scheduled through the same MC-DCI. For example, if the number of RB(G)s set for a specific reference cell is the minimum among the number of RB(G)s of cells scheduled through the same MC-DCI, the FDRA field and/or the FDRA information may be configured and/or indicated based on the number and/or size of the RB(G)s set for the reference cell. Here, the cells scheduled through the same MC-DCI may mean cells belonging to a co-scheduled cell set, a cell subgroup belonging to a co-scheduled cell set, or the entire scheduling cell set. At this time, for a cell in which N_more RB(G)s are set, which are greater than N_min, the FDRA information indicated by the FDRA field, that is, the information on at least one RB(G) indicated and/or allocated for the area including the indices of N_miN RBs(G), may be applied to the index area of N_miN RBs(G)s among N_more RB(G)s. At this time, it may be interpreted that resource allocation for the remaining some RB(G)s of the corresponding cell, that is, N_more-N_miN RB(G)s, is omitted. The method of configuring the FDRA field and/or the FDRA information based on the minimum number N_min of RB(G)s as described above may be referred to as "FDRA based on the minimum number of RB(G)s, or min-based FDRA" for the convenience of explanation.

FIG. 9 illustrates an example of an FDRA method based on a minimum number of RB(G)s in a wireless communication system according to an embodiment of the present disclosure. For convenience of explanation, FIG. 9 shows a case where two CCs are included in one cell subgroup. However, the FDRA method based on the minimum number of RB(G)s described in FIG. 9 may also be applied to a case where three or more CCs are included in a cell subgroup.

Referring to FIG. 9, CC1 901 and CC2 902 may be set as one cell subgroup scheduled through the same MC-DCI. In FIG. 9, since the number of RBGs of CC2 902 is smaller than that of CC1 801, the FDRA field and/or FDRA information may be configured based on the number or size of RBGs of CC2 802. In this case, RBG4 and RBG5 of CC1 901 are not indicated by the FDRA field. Therefore, according to various embodiments, whether to allocate RBG4 and RBG5 may be indicated based on one of the following methods.

A. RBG4 and RBG5 may be determined not to be used in CC1. This can lead to an advantage of operating the DCI field of the PDCCH with a minimum number of bits.

B. Whether RBG4 and RBG5 are used or not may be determined in advance through reconfiguration of the RRC layer or in a semi-static manner in the MAC layer. This provides an effect of improving frequency utilization compared to the aforementioned method A.

C. The terminal may determine whether to use or not to use RBG4 and RBG5 by referring to whether to use or not to use RBGs (e.g., RBG2, RBG3) having lower indices than RBG4 and RBG5. That is, by estimating whether to use RBG4 and RBG5 based on the similarity of adjacent channels, the utilization of RBG4 and RBG5 can be improved.

According to one embodiment of the present disclosure, the FDRA field and/or the FDRA information may be configured and/or indicated based on the number N_mid of RB(G)s, not the maximum number N_max of RB(G)s and the minimum number N_min of RB(G)s, among the numbers of RB(G)s set for cells scheduled through the same MC-DCI. For example, the FDRA field and/or the FDRA information may be configured and/or indicated based on the number and/or size of RB(G)s set for a specific reference cell. Here, the cells scheduled through the same MC-DCI may mean cells belonging to a co-scheduled cell set, a cell subgroup belonging to the co-scheduled cell set, or the entire scheduling cell set. For a cell having the number of set RB(G)s less than N_mid, the above-described maximum-based FDRA method may be applied, and for a cell having the number of set RB(G)s greater than N_mid, the minimum-based FDRA method may be applied.

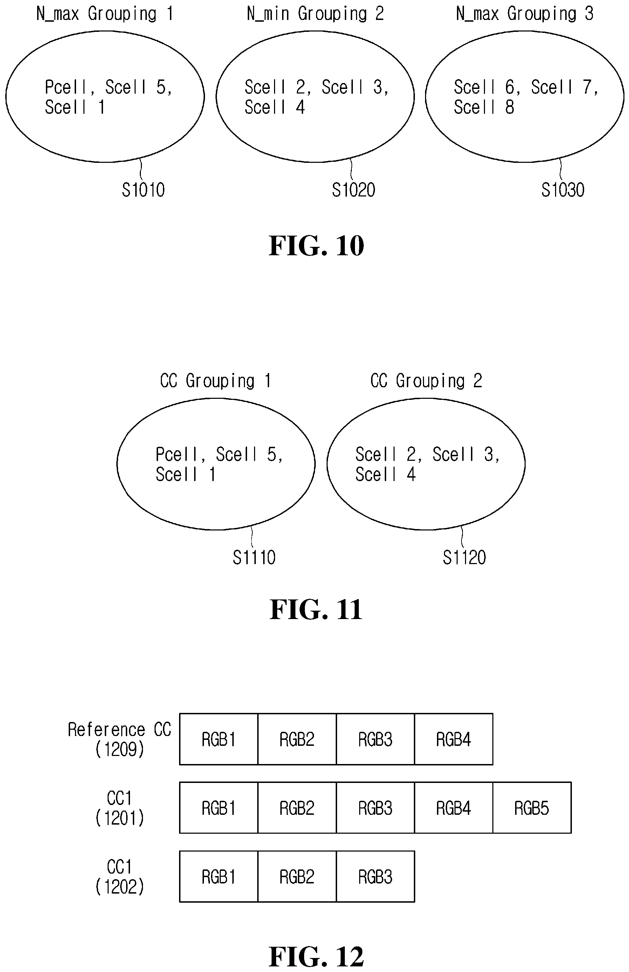

As described above, when configuring the FDRA field based on the cell with the minimum RB(G)s or the maximum RB(G)s, the cells may be grouped based on N_min or N_max in MAC CE or RRC as illustrated in FIG. 10. The base station may perform multi-carrier scheduling based on the group. At this time, whether to group the cells based on N_min or based on N_max may be determined in the higher layer of the base station.

FIG. 10 illustrates an example of a shared-common FDRA bit information configuration method in a wireless communication system according to an embodiment of the present disclosure. Referring to FIG. 10, N_max group 1 1010 includes Pcell, Scell 5, and Scell 1, N_min group 2 1020 includes Scell 2, Scell 3, and Scell 4, and N_max group 3 1030 includes Scell 6, Scell 7, and Scell 8. When a plurality of cells are grouped into a plurality of groups as shown in FIG. 10, a group ID may be added to FDRA. Accordingly, FDRA fields as many as the number of groups may all be included in one PDCCH, i.e., MC-DCI. However, when a plurality of cells are grouped into a single group, the group ID may not be included in the FDRA.

The above-described option-1 may be applied to a resource allocation method using a bitmap of RA (resource allocation) type 0, but is not limited thereto, and may also be used for a resource allocation method using RIV of RA type 1. For example, when the number of RBs of a plurality of CCs is the same and the frequency characteristics between CCs are similar due to frequency aggregation within the band, option-1 may be applied to the RIV method of RA type 1.

According to an embodiment of the present disclosure, a plurality of cell groups or cell subgroups including a plurality of cells scheduled through the same MC-DCI, i.e., cells sharing a single FDRA field in common, may be set up. In this case, the FDRA field and/or FDRA information may be configured and/or indicated for each cell group or cell subgroup through the MC-DCI. In this case, a single cell group may be set up to include only cells for which the same RA type is set up and/or indicated, and cells for which different RA types are set up and/or indicated may be set up to belong to different cell groups.

1-3. FDRA method based on RB(G) based on reference CC

A resource allocation method for multi-carriers may be applied based on a designated reference cell rather than the aforementioned maximum bandwidth or minimum bandwidth. According to one embodiment, scheduled CCs may be grouped by FR (frequency range) or by CC within a band, and one reference CC may be designated for each group. In this case, the grouping may be based on the configuration of the base station, and no special principle may be determined in advance.

If a reference CC specified in a group has N RB(G)s, the RA information may indicate specific RB(G) indices in the form of an RB(G) bitmap or RB(G)-level RIV for the N RB(G)s. In this case, if the RA information is applied to another CC in the group other than the reference CC, it may be interpreted that the same RBG index is allocated based on the RBG included in the RA information, or it may be interpreted that the RB index indicated by the RA information is allocated.

According to one embodiment, the reference CC may be implicitly, explicitly, dynamically, statically, or semi-statically designated and/or changed in the form of MAC CE, RRC reconfiguration, or DCI. According to one embodiment, the reference CC may be predetermined to be a CC with a lowest index or a CC with a highest index among the CCs in the group. The reference CC may be a designated CC that representatively provides specific DCI fields and indicates one of scheduled CCs. If the group includes only one CC, the CC may be designated as the reference CC, and the reference CC may be indicated by a designated RNTI (radio network temporary identifier) or C-RNTI (cell-RNTI) of the CC. According to one embodiment, an MC-RNTI (multicell-RNTI) for MC-DCI may be used.

[Table 7] shows an example of RB(G) configuration by a reference CC within a CC group.

[Table 7]

|  | Cell1 | Cell2 | Cell 3 | Total |
|---|---|---|---|---|
| Number of RBs | 30 | 40 | 50 | 120 |
| Number of RBGs | 6(size 5) | 8(size 5) | 10 (size 5) | 24 |

[Table 7] shows that when Cell 2 is designated as a reference CC in a CC group including Cell1, Cell2, and Cell3, resources for the CC group are allocated based on RBG size 5. At this time, the separate-delta FDRA method may be considered to indicate an index for the RBG. When scheduling a single cell with MC-DCI, the following two methods may be applied.

-     Method 1: Ignore the indicated FDRA of the reference cell, or indicate the FDRA of the single cell without indicating the reference CC with MC-DCI.
- Method 2: Interpret the FDRA of the cell according to the existing reference CC even though only one CC is scheduled.

Additionally, in the shared-common FDRA field indication method, the resource allocation information of FDRA may be used as indication information for cells scheduled with MC-DCI as an indication for a cell group. In other words, the FDRA field provided for each cell group may also be used as validity information, in which case, the FDRA field may indicate whether at least one of the cells belonging to the group has been actually scheduled. At this time, if the CIF bit is insufficient, the base station may group CC group 1 and CC group 2 into one group through grouping of cells and indicate a configuration related to the CIF using one CIF value. In a situation where CC group 1 and CC group 2 are grouped into one group and share one CIF, if only scheduling for CC group 1 is performed, the base station may intentionally indicate that the FDRA value of CC group 2 is invalid. For example, the base station may set all bitmap values of FDRA to '0', or set all RIV values of FDRA to '1'. This method may be equally applied when a cell is composed of one group, or when it is assumed that there is only one group in the scheduled CC. The reference CC may be one of the scheduled CCs or one of the grouped CCs. In this case, each bit of the CIF may be used to indicate the validity of the remaining CCs or CC groups except the reference CC.

Option-2: Separate-delta FDRA bit information configuration

According to the separate-delta FDRA bit information configuration method, other CCs may refer to the delta based on the FDRA bit information of the reference CC. For grouped cells using one MC-DCI, the separate-delta FDRA method may be set based on one reference CC, and the application of the separate-delta method may be set in the higher RRC layer or MAC layer.
As illustrated in FIG. 11, when scheduling PDSCHs of a plurality of cells using one PDCCH, the base station may divide the plurality of cells or the plurality of CCs into a plurality of groups in consideration of frequency characteristics. FIG. 11 illustrates an example of a cell group for multi-carrier PDCCH scheduling in a wireless communication system according to an embodiment of the present disclosure. In FIG. 11, cells (e.g., Scell 5 and Scell 2) that are inverted within CC group 1 1110 and CC group 2 1120 are reference CCs of the corresponding CC groups. In the case of the aforementioned option-1, a cell having a maximum RB(G) or a minimum RB(G) is set as the reference CC. In the case of option-2, any cell may be the reference CC. In this case, the FDRA information of the corresponding arbitrary cell may be used as the reference FDRA information of the corresponding CC group. Therefore, the base station may only indicate delta information indicating the difference from the reference FDRA information, for other cells in the CC group. At this time, the group ID, the reference FDRA information, or the delta information may increase by the number of CC groups. If the CC group includes only one cell, the delta information indicating the difference from the reference FDRA information may be set as the entire FDRA field information of the MC-DCI.
The aforementioned option-2 has a disadvantage of increasing the total number of bits related to frequency allocation in the PDCCH, i.e., the amount of information, compared to option-1, but has an advantage of increasing flexibility for frequency allocation. That is, option-2 may utilize frequencies more efficiently in an inter-band carrier aggregation situation. The specific operation based on the reference CC will be described with reference to FIG. 12 below.
FIG. 12 illustrates an example of a separate-delta FDRA information configuration in a wireless communication system according to an embodiment of the present disclosure. Referring to FIG. 12, one reference CC 1109 may be determined for each group. When two RBGs are set in the reference CC 1109, they may be sequentially indexed as RBG1, RBG2, RBG3, and RBG4. At this time, CC1 1101 further includes RBG5, and CC2 1102 does not include RBG4. The difference in the RGB structure compared to the reference CC 1109 may be indicated by additional information. The additional information indicating the RGB structure compared to the reference CC 1109 may be transferred in advance from a higher layer. For example, the additional information may have a form such as "LIST {... -2, -1, 0, 1, 2, ... }". If the additional information for a CC is -1, this indicates that the remaining RBGs except RBG4, i.e., RBG1, RBG2, and RBG3, are allocated, like CC2 1102. If the additional information for a CC is 1, this indicates that one more RBG, i.e., RBG5, is allocated in addition to RBG1, RBG2, RBG3, and RBG4, like CC1 1101. Similarly, if the additional information is -2, this indicates that the remaining RBGs except RBG3 and RBG4, i.e., RBG1 and RBG2, are allocated, and if the additional information is 2, this indicates that RBG5 and RBG6 are further allocated in addition to RBG1, RBG2, RBG3, and RBG4. In this case, the number of additionally allocated RBG units may be variably pre-configured. This operation may be equally applied regardless of whether multiple cells of a PDSCH scheduled with one MC-DCI are included in one group or multiple groups.
In the above description, the method of allocating the frequency of FDRA mainly using the bitmap of RA type 0 was described. Unlike RA type 0, the method of using RIV of RA type 1 allocates the frequency by utilizing length and start information. When RA type 1 is applied, for CCs other than the reference CC, a delta indicating a difference from the length information of the reference CC may be indicated by the FDRA field. That is, the FDRA field may include a delta value indicating a decrease (e.g., -X or -Y) or an increase (e.g., +X or +Y) in the length information of the reference CC. According to this method, scheduling for multiple cells and carriers is possible in one PDCCH. According to one embodiment, a group ID may be added, like RA type 0, depending on whether the CCs belong to one group or multiple groups. The method of allocating frequency resources using RIV may also be used for the DCI X_2 format of the PDCCH introduced in Release 16. For example, it is possible to apply the K2 value, which is determined by higher layer parameters such as L3 RRC resourceAllocationType1GranularityDCI-1-2, to all cells in common or to each group in common.

Option-3: Separate-equal FDRA bit information configuration

The size of FDRA may be variably increased or decreased depending on the number of CCs scheduled. When N cells are configured for carrier aggregation, the N cells are not always scheduled simultaneously. That is, the number of CC(s) scheduled simultaneously may vary depending on the amount of data, channel, and/or frequency conditions. In this case, according to Option-3, unlike Option-1 and Option-2, the number of bits of the FDRA field may be the same regardless of how many cells are scheduled on the current PDCCH. In other words, the number of bits of the FDRA field may be the same when the number of CCs scheduled in one PDCCH is 1 and when it is MAX. Generalizing this, when one CC is scheduled in one PDCCH, the size of the FDRA field for one CC is N bits, and when a plurality of CCs are scheduled in one PDCCH, the size of the FDRA field is also N bits, and in this case, the size of the FDRA field for each of the plurality of CCs may be M, P, ..., K bits. Here, N>M, P, ..., K, and N=M+P+...+K.

When PDSCHs of the plurality of cells are scheduled in one PDCCH, a plurality of CCs are not always equally scheduled with the same number of bits. For example, when the number of CCs is 1, the bits of the FDRA field for the CC are 12 bits, and when the number of CCs is 2, the bits of the FDRA field for each CC are 6 bits, but it is possible to set the RBG size to be larger in the bitmap form of RA type 0. As another example, when the number of CCs is 3, the number of bits of the FDRA field may be divided into 4 bits and allocated to the CCs, or bits may be differentially allocated to the CCs by assigning weights to each CC, such as 3 bits or 6 bits, according to the size of the BWP. In this case, the weights may be determined as follows.

(1) The number of bits used for each CC may be determined using 1 CC BWP size/(1 CC BWP size + 2 CC BWP size) and 2 CC BWP size/(1 CC BWP size + 2 CC BWP size).
(2) The total number of bits is determined according to the number of CCs, and the number of bits used for each CC may be determined according to a method specified based on the BWP size. In this case, the RBG size may be operated to be coarser.

Similar to Option-1 and Option-2, the base station may form multiple groups by grouping cells with similar characteristics and add a group ID for each group to the FDRA field. This enables scheduling of a plurality of cells in one PDCCH. However, if the number of groups is one, the group ID information may be excluded.

According to one embodiment, in the case of RA type 0, for BWP#A of CC1, "the number of RBs per RBG during 1-CC scheduling=3, the number of RBs per RBG during 2-CC scheduling=5, and the number of RBs per RBG during 3-CC scheduling=10" may be preset, for BWP#B of CC2, "the number of RBs per RBG during 1-CC scheduling=5, the number of RBs per RBG during 2-CC scheduling=10, and the number of RBs per RBG during 3-CC scheduling=15" may be preset, and for BWP#C of CC3, "the number of RBs per RBG during 1-CC scheduling=4, the number of RBs per RBG during 2-CC scheduling=6, and the number of RBs per RBG during 3-CC scheduling=12" may be set. At this time, when performing scheduling for {1-CC, 2-CC, 3-CC} using MC-DCI, the size of the FDRA field may be determined by the number of bits of the combination that requires the most bits for the FDRA field among the combinations of {CC1 only, CC2 only, CC3 only, CC1+CC2, CC1+CC3, CC2+CC3, CC1+CC2+CC3}.

According to one embodiment, in the case of RA type 1, for BWP#A of CC1, "K2 (RIV granularity)=1 during 1-CC scheduling, K2=3 during 2-CC scheduling, K2=5 during 3-CC scheduling" may be preset, for BWP#B of CC2, "K2=1 during 1-CC scheduling, K2=2 during 2-CC scheduling, K2=3 during 3-CC scheduling" may be preset, and for BWP#C of CC3, "K2=2 during 1-CC scheduling, K2=3 during 2-CC scheduling, K2=4 during 3-CC scheduling" may be set. At this time, when performing scheduling for {1-CC, 2-CC, 3-CC} using MC-DCI, the size of the FDRA field may be determined by the number of bits of the combination that requires the most bits for the FDRA field among the combinations of {CC1 only, CC2 only, CC3 only, CC1+CC2, CC1+CC3, CC2+CC3, CC1+CC2+CC3}.

For cells scheduled via MC-DCI, individual FDRA fields and/or FDRA information may be configured and/or indicated for each cell. Hereinafter, for convenience of explanation, for a cell whose bandwidth is set to N RBs, an RBG size defined and/or set by existing DCI-based scheduling is referred to as K. Here, existing DCI-based scheduling means existing DCI-based scheduling for a single cell, and K is the maximum number of RBs configuring the corresponding RBG. At this time, when scheduling cells whose bandwidths are set to N RBs via MC-DCI, an RBG size corresponding to the corresponding cell may be set to L, which is larger than K. At this time, depending on the L value, an FDRA field and/or FDRA information having a size smaller than the FDRA size based on the K value may be configured and/or indicated. If the RBG size defined and/or set by the existing DCI-based scheduling is K=1, then L, which is the RBG size in the case of MC-DCI-based scheduling, is set to a value greater than 1, so that the RIV-based contiguous RBG allocation method may be applied. The above-described method may be applied in the case where a plurality of cells are scheduled through MC-DCI. That is, in the case where only one cell is scheduled through MC-DCI, K, which is the RBG size defined and/or set in the existing DCI-based scheduling, may be applied.

Additionally, whether to apply the Option-1 based FDRA bit information configuration method or the Option-3 based FDRA field bit information configuration method may be indicated by a specific indicator within MC-DCI. Here, the specific indicator may be composed of 1 bit.

Meanwhile, for the RA type indicator that indicates whether to apply the RIV-based contiguous RB(G) allocation method or a RB(G) unit bitmap-based allocation method, the following bit information configuration may be considered to be included in MC-DCI. The RA type indicator may be composed of 1 bit.

- Configuration A: When only one field indicating the RA type is configured for cells scheduled through the same MC-DCI, the RA type indicated by the field may be commonly applied to all cells, i.e., cells for which an RA type indicator is set in the existing DCI (e.g., single-cell scheduling DCI) (hereinafter, 'configured cells'). In this case, a default RA type may always be applied to cells for which an RA type indicator is not set in the existing DCI-based scheduling (hereinafter, 'unconfigured cells'). Here, the cells scheduled through the MC-DCI may include cells of the co-scheduled cell set or each cell subgroup belonging thereto. In addition, the configured cell means a cell for which an RA type indicator is set by the existing DCI-based scheduling among the cells belonging to the co-scheduled cell set or each cell subgroup belonging thereto. For example, the default RA type may be defined by the RIV-based continuous RB(G) allocation method.

According to one embodiment, when both the configured cell and the unconfigured cell are included in a co-scheduled cell set or the same cell subgroup, a field for an RA type indicator may be omitted in the MC-DCI, and a default RA type may always be applied.

According to one embodiment, when both the configured cell and the unconfigured cell are included in a co-scheduled cell set or the same cell subgroup, a field for an RA type indicator may be included in the MC-DCI. At this time, an RA type applicable only to the configured cell is indicated by the field, and PDSCH/PUSCH transmission and reception may be performed under the consideration and/or assumption that there is no scheduling for the unconfigured cell. For example, the RA type applicable only to the configured cell may be a bitmap-based RB(G) allocation method.

According to one embodiment, the configured cell and the unconfigured cell may be restricted from being included in the same cell subgroup. For example, a cell subgroup may be restricted to contain only configured cells or only unconfigured cells.

- Configuration B: When only a field for one RA type indicator is configured for cells scheduled through the same MC-DCI, the RA type indicated by the field is applied only to a designated reference cell, and a default RA type that is set and/or defined in advance may be applied to the remaining cells. Here, the cells scheduled through the same MC-DCI may include cells of a co-scheduled cell set or each cell subgroup belonging thereto. In addition, the reference cell may be a cell with the highest or lowest cell index among the cells for which an RA type indicator is set by existing DCI-based scheduling, a cell with the largest or smallest SCS, a cell where MC-DCI is transmitted, a cell indicated by a CIF field, or a cell directly designated by RRC. Here, the default RA type may be set and/or defined to indicate a RIV-based continuous RB(G) allocation method.
- Configuration C: A field for an RA type indicator may be included in the DCI only when one cell is scheduled through MC-DCI. That is, when a plurality of cells are scheduled through MC-DCI, the field for an RA type indicator may be omitted in the DCI. When the field for an RA type indicator is included, an RA type indicated by the field may be applied to the cell. On the other hand, when the field for the RA type indicator is not included, a preset and/or defined default RA type may be applied to the plurality of cells. For example, the default RA type may be set to indicate a RIV-based continuous RB(G) allocation method.
- Configuration D: The field for RA type indicator is not included in MC-DCI and may be omitted. In this case, a preset and/or defined default RA type may be applied to cells scheduled via MC-DCI. For example, the default RA type may be set to indicate a RIV-based continuous RB(G) allocation scheme.

Option-4: Various other indications and scheduling configurations

As described above, the FDRA field information occupies the largest number of bits among various pieces of information included in the PDCCH (e.g., MIMO (multiple input multiple output), MCS (modulation and coding scheme), HARQ (hybrid automatic repeat request), TDRA (time domain resource allocation), etc.). The above-described option-1, Option-2, and Option-3 may be applied to the case where a plurality of CCs have frequency correlation and shareable features. However, there may be cases where there is no frequency correlation between a plurality of CCs. In this case, a situation may arise where the FDRA of about 14 to 18 bits must be increased by a multiple of the number of a plurality of CCs. At this time, if a considerable number of cells or carriers are simultaneously activated, it will be difficult to increase the FDRA by a multiple of the number of CCs. However, if only a small number of CCs are activated, it is possible to apply a method of increasing the FDRA by a multiple of the number of CCs.

For example, if the number of activated cells is less than N (e.g., 2 or 3), for each cell, one field that concatenates the FDRA bits in the conventional manner in parallel may be included in one PDCCH. However, in the case of the parallel concatenation method, the number of CCs that may be scheduled by MC-DCI may be significantly limited. Therefore, a method of adding all RB(G)s of BWPs of all CCs and then coarsely controlling the RB(G) size according to the number of added RB(G)s, i.e., the total length, and allocating resources may be applied. That is, a new RBG size table that defines an RB(G) size value that increases in proportion to the total number of RBs may be used.

[Table 8] shows an example of an RBG size table when the RBG sizes of all cells are equal.

[Table 8]

|  | Cell 1 | Cell 2 | Cell 3 | Total |
|---|---|---|---|---|
| Number of RBs | 30 | 30 | 30 | 90 |
| Number of RBGs | 10(size 3) | 10(size 3) | 10 (size 3) | 30 |
| Number of RBGs | 6(size 5) | 6(size 5) | 6(size 5) | 18 |
| Number of RBGs | 5(size 6) | 5(size 6) | 5(size 6) | 15 |

According to one embodiment, the RBG size may be set differently according to the number of RBs or bandwidths of a plurality of CCs, and the total number of RBs may be calculated by considering the different number of RBs per RBG according to the differently set RBG sizes. For example, as shown in [Table 9], the RBG size of CC1 may be set to 5 and the RBG size of CC2 may be set to 3 and then added. That is, the RBG size may be considered before adding the RBs of each CC. In other words, the bandwidth may be considered before adding the RBs of each CC to calculate the total RBG. [Table 9] shows an example of an RBG size table when the RBG sizes of all cells are different.

[Table 9]

|  | Cell1 | Cell2 | Cell 3 | Total |
|---|---|---|---|---|
| Number of RBs | 30 | 30 | 30 | 90 |
| Number of RBGs | 10(size 3) | 6(size 5) | 5 (size 6) | 21 |

However, when the number of CCs exceeds a certain level, the application of the above-described methods may not be easy. Therefore, the FDRA-related information of each carrier or each cell may be transferred semi-statically in the MAC CE, and a delta value indicating a difference may be transmitted using the DCI of the PDCCH. The method of using the MAC CE is as follows.

4-1. FDRA information may be indicated per cell using MAC CE. In this case, the FDRA field of MC-DCI may be omitted. Also, in some cases, it may be applied to other DCI fields other than FDRA.

4-2. Similar to option-3, a group ID may be added to the information of the reference CC in MAC CE. At this time, a delta value indicating a difference from the reference CC may be transmitted using MC-DCI.

4-3. A specific flag bit is added to DCI, and the flag bit indicates one of two options among the predefined option-1, option-2, and option-3, so that the option used among the two options may be changed in real time using DCI. Accordingly, information applicable to option-1, option-2, and option-3 may be added to DCI in real time.

4-4. The maximum size of the FDRA field that may be used in the entire MC-DCI, i.e., the number of bits, may be determined in advance. The maximum number of bits of the FDRA field may be preset in the higher layer, and may also be determined to be a specific value by the standard. In addition, whether FDRA information of several cells are connected in parallel within the maximum number of bits of the FDRA field may be determined in various ways.

For example, if the maximum number of bits of the FDRA field is 50, the FDRA information of one cell is at most 18 bits based on the maximum BWP of FR1, so it would be impossible to connect and transmit FDRA information of three cells in parallel through MC-DCI. However, if the size of the BWP is small and the FDRA information per cell is 10 bits, it is possible to connect FDRA information of five cells in parallel and transmit them through MC-DCI. The FDRA information may be for one cell or for one cell group. In the present disclosure, the FDRA information transmitted through MC-DCI may include a plurality of fields. In this case, since the maximum number of bits of the FDRA field in the MC-DCI is limited, the number of FDRA fields may vary depending on the BWP. That is, the number of FDRA fields transmitted through MC-DCI is flexible depending on the size of the BWP. This is because the number of bits of FDRA information is not fixed like other DCI fields, but varies depending on the BWP. That is, if the maximum number of bits of FDRA fields that may be used in the entire MC-DCI is determined in advance, there may be an advantage that the number of FDRA fields varies within the specified maximum number of bits. This method may be applied not only to the FDRA field but also to other fields. For example, if multiple values of a specific field need to be transmitted as cells increase in MC-DCI, the maximum number of bits of the corresponding field may be preset, and the number of fields may be flexibly adjusted depending on the situation within the preset maximum number of bits. According to one embodiment, if the number of FDRA fields to be transmitted exceeds the maximum number of bits, at least some of the fields exceeding the maximum number of bits may be discarded.

4-5. The RA type may be omitted from the DCI and preset in the higher layer. For example, if a 1-bit RA type field is configured for each CC group, the default RA type being not indicated by the RA type field may considered as a CC in which only the default RA type is possible within the CC group being unscheduled. The validity of the cell may be distinguished through the 1-bit RA type field. That is, a cell designated as an RA type other than the RA type preset in the cell group or the CC to be scheduled may be considered as unscheduled.

Additionally, for a plurality of cells scheduled through the same MC-DCI, the indices of RB(G) set for each cell may be sequentially concatenated according to the cell index order. That is, a full RB(G) index set corresponding to the entire number of RB(G)s set for a plurality of cells scheduled through the same MC-DCI may be configured. The full RB(G) index set may be set for each RA type of the plurality of cells. The RB(G) for each cell may be indicated and/or allocated through one FDRA field based on the entire RB(G) or the entire RB(G) index set. In the RIV-based continuous RB(G) allocation method, a combination of a start RB(G) index, an end RB(G) index, or the number of allocated RB(G) may be indicated for each cell, that is, as many as the number of cells.

Furthermore, the meaning of being sequentially concatenated according to the cell index order may be extended as follows. That is, among the CCs in a CC combination that may be co-scheduled in RRC, only the CCs activated by MAC CE may be scheduled using MC-DCI, and at this time, information indicating the validity of the corresponding cell may also be included in the DCI.

Option-5: Multiple scheduling operations for MC-DCI

As described in Option-1 and Option-2, a reference cell or reference CC means a cell that serves as a scheduling reference among cells in a group. Resource allocation information of the remaining cells may be interpreted or expressed based on FDRA information or other DCI field information of the reference cell in the group. The reference cell may be fixedly configured by RRC and may be variable depending on the scheduled CCs. If the reference cell is predetermined in a higher layer, a cell preconfigured in a higher layer may be used as a reference cell regardless of the scheduled CCs. However, if the reference cell is determined based on a cell index or the number of RB(G)s, resource allocation may be performed variably depending on the situation. For example, if a PCell is included in the scheduled CCs, the PCell may be designated as a reference cell and resource allocation may be performed based on the PCell.

There may be cases where the reference CC is not included in the scheduled CCs. Therefore, a rule may be set in advance so that the reference CC is always included in the scheduled CCs. In addition, a rule may be defined so that only one cell is included in each group, or so that all scheduled CCs are grouped into one group. If a cell configured in a higher layer is determined to be a reference cell, the RA efficiency is reduced, but the complexity for generating a retransmission TBS (transport block size) and the complexity of the UE can be reduced. On the other hand, if the reference cell is determined based on the scheduled CCs, the RA efficiency is increased, but the complexity for generating a retransmission TBS and the complexity of the UE can be increased.

5-1: The reference cell may be designated as a cell preconfigured in RRC.

- The reference cell may represent a group CC in MC-DCI or may represent all scheduled CCs. This method may be applied to the aforementioned Option-1, Option-2, and Option-3.
- The reference cell may be designated as one cell indicated by a specific DCI field among a set of values preset in RRC based on FDRA.
- In addition to the reference cell, a plurality of cells in the scheduled CC may be grouped into multiple groups, and a reference cell group may be designated among the groups. The cells in the group may share not only FDRA but also all shared common fields. Other cell groups other than the reference cell group may be operated using the delta or individual DCI fields of the corresponding cells.

5-2: The reference cell may be designated as the cell with the lowest or highest cell ID among the scheduled cells. Alternatively, if a plurality of CC groups are formed from the scheduled cells, one reference cell may be designated for each group.

5-3: Cells set to be scheduled with one MC-DCI in RRC may be in an unactivated state when scheduling using the actual MC-DCI. Therefore, in the case of multi-carrier scheduling, the cells may be controlled to be activated at the same time as the RRC configuration. In addition, the base station may separately operate the activation/deactivation of the uplink MAC CE SCell and the activation/deactivation of the downlink MAC CE SCell depending on the situation.

5-4: It may be distinguished which scheduled CC combination is scheduled in the corresponding MC-DCI through the dedicated RNTI used for the MC-DCI. The base station may group the scheduled CCs, allocate different RNTIs (e.g., MC-RNTI1, MC-RNTI2, MC-RNTIx, etc.) to each group, and signal them using different RNTIs. In this case, various MC-DCIs may be scheduled. The terminal will have to check all the RNTIs for the corresponding MC-DCIs. In this case, the reference CC for each group or for all scheduled CCs may be determined in advance in the higher layer.

5-5: Depending on the type of RNTI, the values applied to the fields of MC-DCI may be set differently. For example, the values applied to the fields of MC-DCI may be set differently, such as FDRA, MIMO, TDRA, MCS, or PUCCH transmission. If a table indexing values applicable to the fields of DCI is defined and the indices are mapped to MC-DCI, it may be indicated which value the field uses.

5-6: Multiple RNTIs corresponding to MC-DCI may be set in RRC. For example, C-RNTI may be set for a case where only one cell is scheduled, and at least one MC-RNTI may be set for a case where two or more cells are scheduled. According to one embodiment, different MC-RNTIs may be set for each cell. In this case, the number of MC-RNTIs may be determined according to the number of CCs scheduled with MC-DCI.

When scheduling a single cell with MC-DCI, C-RNTI may be used. At this time, the validity of the cell may be indicated using CIF indicating the scheduled single cell. At this time, according to another embodiment, when scheduling a single cell with MC-DCI, MC-RNTI may be used instead of C-RNTI.

MC-DCI scrambled using MC-RNTI may be used to indicate which cell is the reference cell. In this case, MC-RNTI may be selected differently depending on the cell designated as the reference cell. The remaining scheduled CCs other than the reference cell may be identified based on the state of the CIF bit.

In MC-DCI, CIF may be interpreted differently for single cell and multi-cell.

When scheduling cell or cell group of MC-DCI is scheduled using MC-RNTI, multiple MC-RNTIs may be allocated, and all cells of MC-DCI scheduled using each MC-RNTI may follow option-1. That is, FDRA is applied as shared-common. For example, in a carrier aggregation situation including three cells in FR1 and three cells in FR2, the base station may schedule three cells in FR1 with one MC-DCI and simultaneously schedule three cells in FR2 with another MC-DCI. In this case, the two MC-DCIs may be processed using different MC-RNTIs. The terminal may verify the validity of each cell or cell group using a field such as CFI. In one embodiment, which cells are mapped to the scheduled CC for the MC-RNTI may be configured in the higher layer. Some cells may be mapped to both MC-DCIs. That is, the cells mapped to the MC-DCI may include only cells that may share common shared DCI fields, and may be assigned a specific MC-RNTI suitable for the corresponding MC-DCI.

5-7: As an example of RNTI for MC-DCI, multi-cell scheduling can be performed using CS (configured scheduling)-RNTI that may be triggered at one time. In this case, it is desirable that CS for cells scheduled by RRC is pre-configured.

When cells scheduled using DCI (e.g., cells dynamically scheduled) and cells not scheduled (e.g., cells scheduled according to CS or configured grant (CG)) are included in the co-scheduled CCs, the validity of the cells may be determined according to RNTI.

i. When an RNTI called MC-CS-RNTI is defined and a DCI for CS is transmitted using MC-CS-RNTI, only CCs configured with CS may be considered as valid. If DCI is processed with MC-RNTI, only CCs to which CS is not applied may be considered as valid.

ii. CCs scheduled with one MC-DCI may include only cells configured with CS or only cells without configuration.

5-8: At least one remaining field except for fields that may be shared, such as FDRA, TDRA, MCS, RA type, and PUCCH-related configuration, exists for each cell. A field that exists for each cell may be referred to as a 'separate field'. In a separate field, the value of the reference CC may be placed at the front. Depending on the field, the value of the reference CC may be omitted. For example, in indicating validity for each CC, validity mapping (e.g., if it consists of 3 bits, 0 means no scheduling) may be performed on the CIF bits for the remaining cells except for the reference CC, and the mapping order may be determined according to the cell ID (e.g., ascending or descending order).

In the case of a separate field, each bit of one CIF may indicate the validity of a cell group and a single cell.

5-9: When only MC-RNTI is used in MC-DCI, which CC among CCs is the reference CC may be indicated using MC-RNTI. Specifically, which CC is the reference CC may be checked depending on whether MC-DCI is scheduled for the corresponding cell. For example, the reference CC may be designated in RRC. In this case, MC-DCI scheduling a specific CC combination may be mapped to one RNTI. And, the configurations reconfigured in RRC for the reference CC may become the basis for interpreting the DCI field of other cells.

According to one embodiment, if a cell scheduled using MC-DCI (e.g., a cell transmitting MC-DCI) is not included in the scheduled CCs (e.g., a cell corresponding to resources allocated by MC-DCI), cell-related information preset in RRC (e.g., FDRA, MCS, or PUCCH-related information) may be used. Alternatively, if a cell scheduled using MC-DCI is not included in the scheduled CCs, cell-related information based on the scheduled cell (e.g., FDRA, MCS, or PUCCH-related information) may be used, and the cell scheduled using the MC-DCI may not be considered as a scheduled cell.

A cell transmitting MC-DCI scrambled using MC-RNTI may be a specific cell or a designated cell among the scheduled cells. The cell may be preconfigured in a higher layer. At this time, the cell where MC-DCI is scheduled may not transmit the legacy DCI provided for C-RNTI use of the existing general USS (user-specific search space).

MC-DCI scheduling a single cell may be restricted to be used only for the cell transmitting the MC-DCI. That is, cross-carrier scheduling is not used, and only self-scheduling is possible.

5-10: Which of the scheduled CCs is actually scheduled (e.g., whether it is valid) may be indicated using FDRA. At this time, the order of the indicated cells may be determined by the cell index. In this case, the value for the actually scheduled cell or cell group may be set to FDRA information, and the value for the unscheduled cell or cell group may be set to a designated 1-bit value (e.g., '0'). When FDRA is set for each cell group, the FDRA field may follow the shared-common method, as in Option-1.

5-11: CIF may indicate the number of CCs currently scheduled, and the number of CCs scheduled may be up to 8. At this time, all scheduled CCs follow the shared-common method, and the order of scheduled CCs may be mapped in the order of low or high cell index.

5-12: Among the 3-bit CIF, one bit may indicate the reference CC, the FDRA of the current MC-DCI, or another DCI field available in shared-common manner, and the remaining two bits may indicate the number of CCs scheduled, or the number of groups. At this time, up to 2 FDRA fields may be transmitted.

5-13: The number of groups that may be scheduled with MC-DCI is set to 1, 2, or 3, and each group may include a plurality of cells. Which of the cells in the group is valid or invalid may be checked based on whether a value indicated by a reference cell is the same as a value predetermined in a higher layer, for example, using an RA field or a VRB-to-PRB mapping bit. That is, if the value indicated by the reference cell is the same as the value predetermined in the higher layer, the cell is a scheduled valid cell, and if not, the cell may be considered as an unscheduled invalid cell. Here, there may be only one cell in a cell group, or there may be only one cell group.

5-14: When the reference cell is specified in a cell group or in scheduled CCs, the FDRA information may be located at the very front of the field, and the validity for the reference cell may be indicated in the first bit of the CIF. In other words, the FDRA information of the reference CC may be located at the very front of the FDRA field, and the validity of the reference CC may be located at the very front of the CIF.

5-15: The MC-RNTI may be set differently depending on the number of cells scheduled using MC-DCI, or the number of cell groups. When one cell or cell group is scheduled using MC-DCI, the C-RNTI may be used.

5-16: Some DCI fields among the DCI fields may be used in common-shared manner in a plurality of cells, but some DCI fields must be used individually among a plurality of cells. Individual use and common use of each DCI field may be preset in a higher layer. When used individually, the maximum total number of available bits for each field is determined, and if it exceeds this, the cell may be considered as invalid in scheduling.

According to the embodiments of the present disclosure, through the above-described methods, convenience in scheduling can be improved by clearly indicating which cell or which cell group the scheduling is for.

As carrier aggregation evolves and develops to 5G NR, the frequency bands that may be transmitted simultaneously have increased to 6 GHz or higher, 20 GHz, 30 GHz, 60 GHz, or 100 GHz of mmWave, and accordingly, the number of cells that are operated simultaneously has increased rapidly. Regardless of whether the self-scheduling method or the cross-carrier scheduling method is used since the previous 4G LTE, one PDCCH, i.e., DCI, had to be transmitted once in order to transmit one PDSCH in one cell. When the number of PDSCHs that had to be transmitted simultaneously was small, it did not cause a great burden for the terminal to decode the PDCCH multiple times. However, when the number of PDSCHs that had to be transmitted simultaneously is large and the terminal had to decode a large number of PDCCHs, it affected the performance of the terminal and occupied a lot of the frequency and time resource element area, which could also have a negative impact on the usability of the resource elements for traffic transmission. Therefore, a method of scheduling PDSCHs of multiple cells with one PDCCH may be effective. However, since the maximum amount of bit information that may be used as a payload in 5G NR is limited, and the FDRA information for each cell requires a large number of bits, it is difficult to use a multiple of the number of CCs for bits for FDRA information in one PDCCH.

Therefore, the present disclosure proposes a method capable of scheduling a plurality of cells without using many bits in the PDCCH. That is, according to the embodiment of the present disclosure, scheduling for multiple carriers is possible in one PDCCH, and an option suitable for the number of CCs may be adaptively selected and operated depending on the situation.

As described above, multi-carrier scheduling may be performed according to various embodiments. MC-DCI may be used for multi-carrier scheduling, and MC-DCI includes at least one field including frequency resource allocation information for a plurality of CCs, i.e., FDRA values. Hereinafter, the operation of a base station and a terminal performing multi-carrier scheduling according to the above-described embodiments will be described with reference to the drawings.

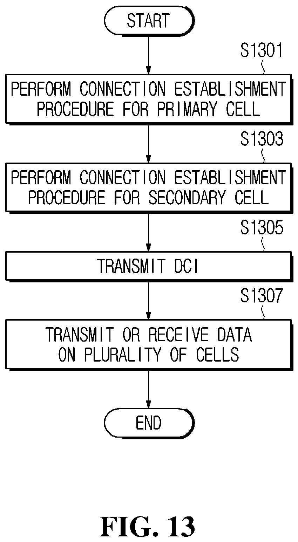

FIG. 13 illustrates an example of a frequency domain resource information acquisition procedure in a wireless communication system according to an embodiment of the present disclosure. FIG. 13 illustrates an operation method of a base station.

Referring to FIG. 13, in step S1301, the base station performs a connection establishment procedure for a primary cell. After a terminal accesses the base station, the base station performs a connection establishment procedure with the terminal. To this end, the base station may receive a setup request message for connection from the terminal and transmit a setup complete message. Although not illustrated in FIG. 13, prior to step S1301, the base station may perform an initial access procedure by receiving a random access preamble from the terminal and transmitting a random access response (RAR) message.

In step S1303, the base station performs a connection establishment procedure for at least one secondary cell. After the connection for the primary cell of the terminal is established, the base station performs an additional connection establishment procedure with the terminal. To this end, the base station may receive a reconfiguration message for connection from the terminal and transmit a reconfiguration complete message. Accordingly, one primary cell and at least one secondary cell may be configured between the base station and the terminal. In addition, although not illustrated in FIG. 13, the base station may transmit a MAC CE for activating at least one secondary cell.

In step S1305, the base station transmits DCI. Here, the DCI may include information for multi-carrier scheduling. That is, the base station allocates resources of a plurality of cells to the terminal, generates DCI indicating the allocated resources, and transmits the DCI to the terminal through one of the plurality of cells. For example, the DCI may include information indicating resources allocated in a plurality of cells including one primary cell and at least one secondary cell. At this time, frequency resources for each cell may be indicated according to the various embodiments described above. In some cases, resources may not be allocated in some of the plurality of cells. In this case, the DCI may include information indicating at least one cell to which resources are not allocated, that is, not actually scheduled.

In step S1307, the base station transmits or receives data on a plurality of cells. The base station may transmit or receive data through resources of a plurality of cells indicated by the DCI. If downlink resources are allocated by the DCI, the base station transmits data. To this end, the base station may perform channel coding, scrambling, rate matching, constellation mapping, resource mapping, layer mapping, waveform modulation, etc. If uplink resources are allocated by the DCI, the base station receives data. To this end, the base station may perform waveform demodulation, constellation demapping, channel decoding, etc.

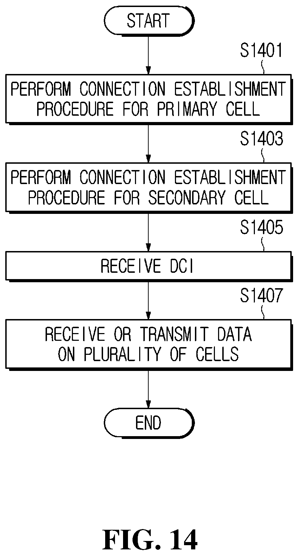

FIG. 14 illustrates an example of a frequency domain resource information transmission procedure in a wireless communication system according to an embodiment of the present disclosure. FIG. 14 illustrates an operation method of a terminal.

Referring to FIG. 14, in step S1401, the terminal performs a connection establishment procedure for a primary cell. After the terminal accesses the base station, the terminal performs a connection establishment procedure with the base station. To this end, the terminal may transmit a connection request message to the base station and receive a setup complete message. Although not illustrated in FIG. 14, prior to step S1401, the terminal may perform an initial access procedure by transmitting a random access preamble to the base station and receiving a random access response message.

In step S1403, the terminal performs a connection establishment procedure for at least one secondary cell. After the connection for the primary cell of the terminal is established, the terminal performs an additional connection establishment procedure with the base station. To this end, the terminal may transmit a reconfiguration message for connection to the base station and receive a reconfiguration complete message. Accordingly, one primary cell and at least one secondary cell may be configured between the base station and the terminal. In addition, although not illustrated in FIG. 14, the terminal may receive a MAC CE for activating at least one secondary cell.

In step S1405, the terminal receives DCI. Here, the DCI may include information for multi-carrier scheduling. That is, the terminal may check the result of multi-carrier scheduling through the DCI. For example, the DCI may include information indicating resources allocated in a plurality of cells including one primary cell and at least one secondary cell. At this time, frequency resources for each cell may be indicated according to various embodiments described above. In some cases, resources may not be allocated in some of the plurality of cells. In this case, the DCI may include information indicating at least one cell to which resources are not allocated, that is, not actually scheduled.

In step S1407, the terminal receives or transmits data on a plurality of cells. The terminal may receive or transmit data through resources of a plurality of cells indicated by the DCI. If downlink resources are allocated by the DCI, the terminal receives data. To this end, the terminal may perform waveform demodulation, constellation demapping, channel decoding, etc. If uplink resources are allocated by the DCI, the terminal transmits data. To this end, the terminal may perform channel coding, scrambling, rate matching, constellation mapping, resource mapping, layer mapping, waveform modulation, etc.

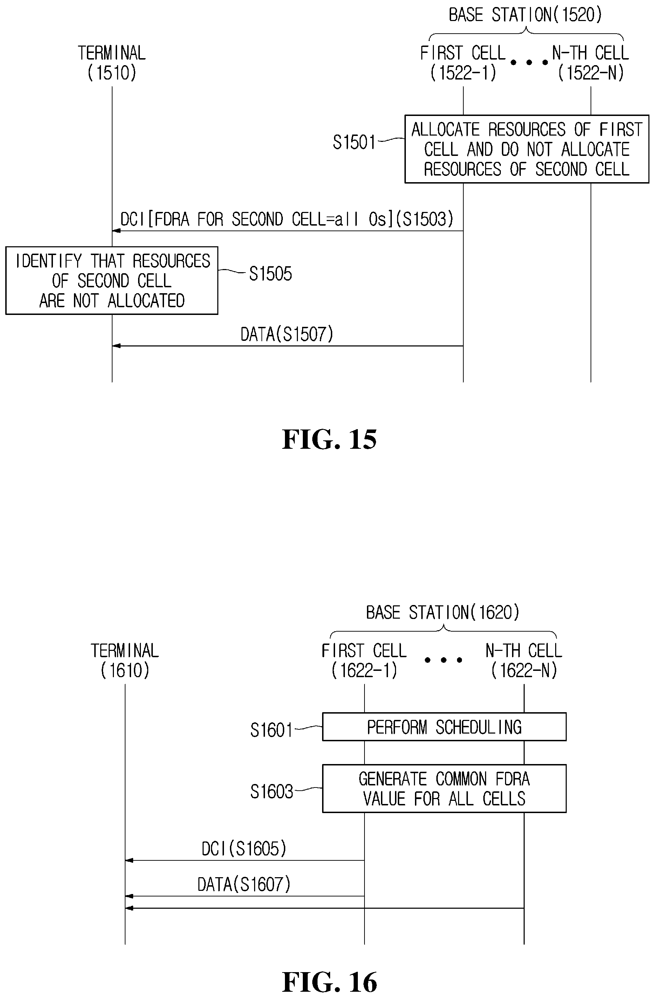

FIG. 15 illustrates an example of a procedure for indicating whether to perform scheduling for each cell using FDRA information in a wireless communication system according to an embodiment of the present disclosure. FIG. 15 illustrates signal exchange between a terminal 1510 and a base station 1520. In FIG. 15, the base station 1520 is described as providing two cells 1522-1 and 1522-2, but the procedure described below may also be applied to a situation where three or more cells are provided.

Referring to FIG. 15, in step S1501, the base station 1520 allocates resources of the first cell 1522-1 to the terminal 1510 and does not allocate resources of the second cell 1522-2. Here, the first cell 1522-1 and the second cell 1522-2 are CCs provided to the terminal 1510 by carrier aggregation, and one of the first cell 1522-1 and the second cell 1522-2 is a primary cell and the other is a secondary cell.

In step S1503, the base station 1520 transmits DCI to the terminal 1510. That is, the base station 1520 transmits information related to the resources allocated in step S1501. At this time, the DCI includes information indicating that the resources of the second cell 1522-2 are not allocated, that is, actual scheduling is not performed in the second cell 1522-2. According to one embodiment, the DCI includes FDRA information for the second cell 1522-2, and the FDRA information for the second cell 1522-2 may be set to all 0s. That is, bits indicating the FDRA information for the second cell 1522-2 may be set to all 0s. Here, all 0s is an example of a value that is not used when resources are allocated, and in other embodiments, a value other than all 0s may be used to indicate resource non-allocation.

In step S1505, the terminal 1510 identifies that the resources of the second cell 1522-2 are not allocated. That is, the terminal 1510 receives the DCI and identifies that the information indicating that actual scheduling is not performed in the second cell 1522-2 in the DCI (e.g., FDRA information set to all 0s), thereby checking that actual scheduling is not performed in the second cell 1522-2. Then, the terminal 1510 identifies the resources allocated in the first cell 1522-1 through the DCI.

In step S1507, the base station 1520 transmits data to the terminal 1510 through the resources of the first cell 1522-1. In other words, the base station 1520 transmits a signal including data to the terminal 1510 through the PDSCH of the first cell 1522-1. Here, the PDSCH is mapped to a resource indicated by the DCI transmitted in step S1503.

FIG. 16 illustrates an example of a procedure for performing multi-carrier scheduling according to a shared-common method in a wireless communication system according to an embodiment of the present disclosure. FIG. 16 illustrates signal exchange between a terminal 1610 and a base station 1620.

Referring to FIG. 16, in step S1601, the base station 1620 performs scheduling. The base station 1620 provides a first cell 1622-1 to a N-th cell 1622-N to the terminal 1610 using carrier aggregation, and performs scheduling for performing communication using the resources of the first cell 1622-1 to the N-th cell 1622-N. Accordingly, resources of each of the first cell 1622-1 to the N-th cell 1622-N may be allocated to the terminal 1610.

In step S1603, the base station 1620 generates a common FDRA value for all cells. The common FDRA value indicates the allocation result of frequency resources by using one value for all cells to be scheduled. To this end, the base station 1620 may determine a group of cells to be scheduled together using one PDCCH and select a reference cell among the cells belonging to the group. In the present embodiment, the first cell 1622-1 to the N-th cell 1622-N are grouped into one group. For example, the reference cell may be selected based on at least one of the number of RB(G)s set in the cell and the cell index. Then, the base station 1620 may generate an FDRA value indicating the scheduling result based on the RB(G) of the reference cell.

In step S1605, the base station 1620 transmits DCI through the resources of the first cell 1622-1. In other words, the base station 1620 transmits DCI through the PDCCH of the first cell 1622-1. Here, the DCI includes the FDRA value generated in step S1603. That is, the DCI may include an FDRA value indicating a scheduling result based on the RB(G) of the reference cell. Alternatively, when a plurality of groups are formed, the DCI may further include identification information of the group. If at least one cell among the cells 1622-1 to 1622-N included in the group is not actually scheduled, the DCI may further include information indicating at least one cell that is not actually scheduled, that is, invalid. In addition, the DCI may further include information indicating the reference cell.

In step S1607, the base station 1620 transmits data using the resources of the first cell 1622-1 to the N-th cell 1622-N. The terminal 1610 may check the resources allocated from the first cell 1622-1 to the N-th cell 1622-N based on the FDRA value included in the DCI. At this time, since the FDRA value is determined based on the RB(G) of the reference cell, the terminal 1610 may check the resources allocated from the reference cell explicitly indicated by the FDRA value, and may check the resources allocated from at least one other cell other than the reference cell by interpreting the FDRA value according to the established rule. Here, the rule for interpreting the FDRA value may be set in advance by separate signaling (e.g., higher layer signaling of the physical layer).

As described with reference to FIG. 16, resources allocated from the plurality of cells are indicated using a common FDRA value. Accordingly, during the scheduling operation in the scheduling step, i.e., step S1601, resources of other cells may be allocated by considering the RB(G) structure of the reference cell. That is, resources of each cell may be allocated within a range that may be indicated using the common FDRA value.

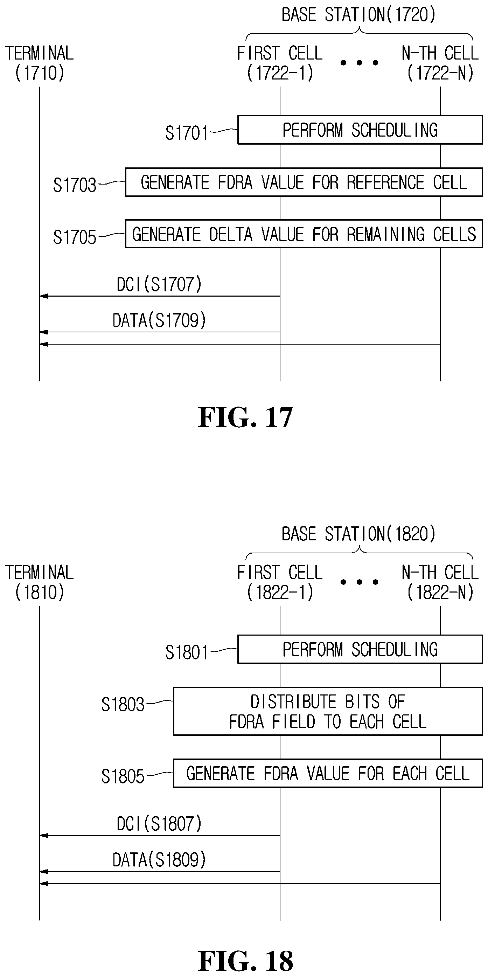

FIG. 17 illustrates an example of a procedure for performing multi-carrier scheduling according to a separate-delta method in a wireless communication system according to an embodiment of the present disclosure.

Referring to FIG. 17, in step S1701, a base station 1720 performs scheduling. The base station 1720 provides a first cell 1722-1 to an N-th cell 1722-N to a terminal 1710 using carrier aggregation, and performs scheduling for performing communication using resources of the first cell 1722-1 to the N-th cell 1722-N. Accordingly, resources of each of the first cell 1722-1 to the N-th cell 1722-N may be allocated to the terminal 1710.

In step S1703, the base station 1720 generates an FDRA value for the reference cell. To this end, the base station 1720 may determine a group of cells that are co-scheduled using one PDCCH, and select a reference cell among the cells belonging to the group. In the present embodiment, the first cell 1722-1 to the N-th cell 1722-N are grouped into one group. For example, the reference cell may be selected based on at least one of the number of RB(G)s set in the cell and the cell index. Then, the base station 1720 may generate an FDRA value indicating resources allocated in the reference cell.

In step S1705, the base station 1720 generates a delta value for at least one remaining cell. That is, the base station 1720 generates information that may indicate resources allocated in another cell by combination with the FDRA value for the reference cell generated in step S1703. Delta values are generated for each cell except for the reference cell, and may indicate resources to be added or excluded compared to the reference cell.

In step S1707, the base station 1720 transmits the DCI through the resource of the first cell 1722-1. In other words, the base station 1720 transmits the DCI through the PDCCH of the first cell 1722-1. Here, the DCI includes the FDRA value generated in step S1703 and at least one delta value generated in step S1705. Alternatively, if multiple groups are formed, the DCI may further include identification information of the group. If at least one cell among the cells 1722-1 to 1722-N included in the group is not actually scheduled, the DCI may further include information indicating at least one cell that is not actually scheduled, i.e., invalid. In addition, the DCI may further include information indicating the reference cell.

In step S1709, the base station 1720 transmits data using resources of the first cell 1722-1 to the N-th cell 1722-N. The terminal 1710 may check the resources allocated in the first cell 1722-1 to the N-th cell 1722-N based on the FDRA value and at least one delta value included in the DCI. At this time, since the delta value is determined based on the FDRA value for the reference cell, the terminal 1710 may check the resources allocated in the reference cell indicated by the FDRA value, and check the resources allocated in at least one other cell other than the reference cell based on the delta value. Here, the rules for interpreting the FDRA value and the delta value may be set in advance by separate signaling (e.g., higher layer signaling of the physical layer).

FIG. 18 illustrates an example of a procedure for performing multi-carrier scheduling according to a separate-equal method in a wireless communication system according to an embodiment of the present disclosure.

Referring to FIG. 18, in step S1801, a base station 1820 performs scheduling. The base station 1820 provides a first cell 1822-1 to an N-th cell 1822-N to a terminal 1810 using carrier aggregation, and performs scheduling for performing communication using resources of the first cell 1822-1 to the N-th cell 1822-N. Accordingly, resources of each of the first cell 1822-1 to the N-th cell 1822-N may be allocated to the terminal 1810.

In step S1803, the base station 1820 distributes bits of the FDRA field to a plurality of cells 1822-1 to 1822-N. To this end, the base station 1820 may determine a group of cells co-scheduled using one PDCCH. In the present embodiment, the first cell 1822-1 to the N-th cell 1822-N are grouped into one group. The base station 1820 may distribute the bits evenly to the cells. Alternatively, the base station 1820 may distribute the bits unevenly to the cells according to a predefined or set rule. For example, the base station 1820 may distribute the bits based on at least one of the BWP size, the number of RB(G)s, and the RB(G) size of each cell.

In step S1805, the base station 1820 generates FDRA values for each of the plurality of cells 1822-1 to 1822-N. The FDRA values for each cell can be determined within a range expressible by bits allocated to the corresponding cell. That is, one FDRA field can include multiple RDRA values.

In step S1807, the base station 1820 transmits DCI through the resource of the first cell 1822-1. In other words, the base station 1820 transmits DCI through the PDCCH of the first cell 1822-1. Here, the DCI includes the FDRA values generated in step S1805. Alternatively, if multiple groups are formed, the DCI may further include identification information of the group. If at least one cell among the cells 1822-1 to 1822-N included in the group is not actually scheduled, the DCI may further include information indicating at least one cell that is not actually scheduled, i.e., invalid. In addition, the DCI may further include information indicating an RA type.

In step S1809, the base station 1820 transmits data using the resources of the first cell 1822-1 to the N-th cell 1822-N. The terminal 1810 may check the resources allocated in the first cell 1822-1 to the N-th cell 1822-N based on the FDRA values included in the DCI. At this time, the FDRA value may be interpreted based on the RA type. Accordingly, the terminal 1810 may check the RA type applied to each of the plurality of cells 1822-1 to 1822-N based on at least one of the DCI or separate signaling, and interpret the FDRA values.

Multi-carrier scheduling may be performed according to the various procedures described above. The procedures described with reference to FIGS. 16, 17, and 18 are examples of procedures according to the shared-common method, the separate-delta method, and the separate-equal method, respectively. However, the procedures described above may be applied jointly. Furthermore, it is possible for various embodiments described in the various options described above (e.g., option-1 to option-4) to be combined with the procedures described above. Accordingly, multi-carrier scheduling according to various embodiments of the present disclosure may be modified in more diverse ways.

As 5G NR evolves and develops, the frequency bands that may be transmitted simultaneously using carrier aggregation have increased to 6 GHz or higher or 20 GHz, 30 GHz, 60 GHz, and 100 GHz of mmWave, and the number of cells that are operated simultaneously has increased significantly. Since the previous 4G system, regardless of whether it is a self-scheduling method or a cross-carrier scheduling method, it has been a rule that one PDCCH, i.e., DCI, is transmitted at least once for one PDSCH transmission in one cell. If the number of simultaneously transmitted PDSCHs is small, the burden of decoding the PDCCH multiple times will not be large. However, if a certain number of PDCCHs must be decoded, it may not only affect the performance of the terminal but also consume a lot of frequency and time resources. Therefore, resources for traffic transmission may be reduced.

Therefore, a method of scheduling PDSCHs of a plurality of cells using a single PDCCH is desirable. However, due to the limitation of the maximum available information amount in the 5G NR system, it is difficult to transmit FDRA requiring a large number of bits as many as the number of CCs. Therefore, the present disclosure proposes a control method capable of scheduling many cells without using a number of bits proportionally increased to the number of CCs for FDRA in the PDCCH, i.e., DCI. According to the various embodiments described above, multi-carrier scheduling using a single PDCCH is possible, and it will be possible to selectively apply suitable options according to the number of CCs from an operational viewpoint.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

Industrial Applicability

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1.  A method of operating a user equipment (UE) in a wireless communication system, the method comprising:

    performing an access procedure with a base station;
    performing a connection establishment procedure for a primary cell with the base station;
    performing a connection establishment procedure for at least one secondary cell with the base station;
    receiving downlink control information (DCI) from the base station; and
    receiving data using resources indicated by the DCI,
    wherein the DCI includes information indicating resources allocated in a plurality of cells including the primary cell and the at least one secondary cell and information indicating at least one cell that is not actually scheduled among the primary cell and the at least one secondary cell.

2.  The method of claim 1, wherein the information indicating the at least one cell that is not actually scheduled includes frequency domain resource allocation (FDRA) information set to a value defined to indicate resource non-allocation.

3.  The method of claim 2, wherein the value defined to indicate resource non-allocation includes a value that is not used when resources are allocated.

4.  The method of claim 2, wherein the value defined to indicate resource non-allocation includes all 0s.

5. The method of claim 1, wherein the DCI indicates the resources based on the number of resource block groups (RBGs) of the plurality of cells.

6. The method of claim 5, wherein the number of RBGs is determined based on an RBG size based on a bandwidth part (BWP) size of each of the plurality of cells.

7. The method of claim 1, wherein the DCI includes an FDRA value commonly applied to the plurality of cells, which is generated based on a resource structure of a reference cell among the plurality of cells.

8. The method of claim 1, wherein the DCI includes an FDRA value generated by a resource structure of a reference cell among the plurality of cells and commonly applied to the plurality of cells.

9. The method of claim 1, further comprising:

receiving information related to a reference cell among the plurality of cells,
wherein the information related to the reference cell is received through a media access control element (MAC) control element (CE), a radio resource control (RRC) message or the DCI.

10. The method of claim 1, wherein the DCI includes a reference FDRA value generated based on a resource structure of a reference cell among the plurality of cells and a delta value compared to the reference FDRA value applied to at least one cell other than the reference cell.

11. The method of claim 1, wherein the DCI includes FDRA values for each of the plurality of cells.

12. A method of operating a base station in a wireless communication system, the method comprising:

performing an access procedure with a user equipment (UE);
performing a connection establishment procedure for a primary cell of the UE;
performing a connection establishment procedure for at least one secondary cell of the UE;
transmitting downlink control information (DCI) to the UE; and
transmitting data using resources indicated by the DCI,
wherein the DCI includes information indicating resources allocated in a plurality of cells including the primary cell and the at least one secondary cell and information indicating at least one cell that is not actually scheduled among the primary cell and the at least one secondary cell.

13. The method of claim 12, wherein the information indicating the at least one cell that is not actually scheduled includes frequency domain resource allocation (FDRA) information set to a value defined to indicate resource non-allocation.

14. The method of claim 13, wherein the value defined to indicate resource non-allocation includes a value that is not used when resources are allocated.

15. The method of claim 13, wherein the value defined to indicate resource non-allocation includes all 0s.

16.

The method of claim 12,
wherein the DCI indicates the resources based on the number of resource block groups (RBGs) of the plurality of cells, and
wherein the number of RBGs is determined based on an RBG size based on a bandwidth part (BWP) size of each of the plurality of cells.

17. A user equipment (UE) in a wireless communication system, the UE comprising:

a transceiver; and
a processor connected to the transceiver,
wherein the processor is configured to:

perform an access procedure with a base station;

perform a connection establishment procedure for a primary cell with the base station; perform a connection establishment procedure for at least one secondary cell with the base station;
receive downlink control information (DCI) from the base station; and
receive data using resources indicated by the DCI,

wherein the DCI includes information indicating resources allocated in a plurality of cells including the primary cell and the at least one secondary cell and information indicating at least one cell that is not actually scheduled among the primary cell and the at least one secondary cell.

18. A base station in a wireless communication system, the base station comprising:

a transceiver; and
a processor connected to the transceiver,
wherein the processor is configured to:

perform an access procedure with a user equipment (UE);
perform a connection establishment procedure for a primary cell of the UE;
perform a connection establishment procedure for at least one secondary cell of the UE; transmit downlink control information (DCI) to the UE; and
transmit data using resources indicated by the DCI,

wherein the DCI includes information indicating resources allocated in a plurality of cells including the primary cell and the at least one secondary cell and information indicating at least one cell that is not actually scheduled among the primary cell and the at least one secondary cell.

19. A communication apparatus comprising:

at least one processor; and
at least one computer memory connected to the at least one processor to store instructions directing operations when executed by the at least one processor,
wherein the operations comprise:

performing an access procedure with a base station;
performing a connection establishment procedure for a primary cell with the base station;
performing a connection establishment procedure for at least one secondary cell with the base station;
receiving downlink control information (DCI) from the base station; and
receiving data using resources indicated by the DCI,
wherein the DCI includes information indicating resources allocated in a plurality of cells including the primary cell and the at least one secondary cell and information indicating at least one cell that is not actually scheduled among the primary cell and the at least one secondary cell.

20. A non-transitory computer-readable medium storing at least one instruction, the non-transitory computer-readable medium comprising the at least one instruction executable by a processor,
wherein the at least one instruction instructs a device to:

perform an access procedure with a base station;
perform a connection establishment procedure for a primary cell with the base station;
perform a connection establishment procedure for at least one secondary cell with the base station;
receive downlink control information (DCI) from the base station; and
receive data using resources indicated by the DCI,

wherein the DCI includes information indicating resources allocated in a plurality of cells including the primary cell and the at least one secondary cell and information indicating at least one cell that is not actually scheduled among the primary cell and the at least one secondary cell.

## FIG. 1

<u>200</u>

208

202                                    206

First Device

Processor(s)    Transceiver(s)

Memory(s)

204

# FIG. 2

FIG. 3

One Subframe

$14 \cdot 2^{\mu}$ OEDM Symbol

$k = N_{RB}^{\mu} N_{SC}^{RB} - 1$

Resource Block

Resource Element
– In a resource grid, $(k, \bar{l})$
– In a resource block, $(k, l)$

$N_{RB}^{\mu} N_{SC}^{RB} - 1$ Subcarrier

$N_{SC}^{RB}$ Subcarrier

$k = 0$

$l = 0$     $l = 14 \cdot 2^{\mu} - 1$

**FIG. 4**

**FIG. 5**

**FIG. 6**

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S701　　　　S702　　　　S703　　S704　　　　S705　　S706　　　　S707　　　　S708

• DL/UL ACK/NACK
• UE CQI/PMI RI REPORT
　USING PUSCH AND PUCCH

FIG. 7

CC1 (801): | RBG1 | RBG2 | RBG3 | RBG4 | RBG5 |

CC1 (802): | RBG1 | RBG2 | RBG3 |

FDRA VALUE BIT VALUES OF RBG1, RBG2 AND RBG3 OF CC1 AND CC2 ARE IDENTICAL

# FIG. 8

CC1 (901): | RBG1 | RBG2 | RBG3 | RBG4 | RBG5 |

CC1 (902): | RBG1 | RBG2 | RBG3 |

# FIG. 9

N_max Grouping 1

Pcell, Scell 5,
Scell 1

S1010

N_min Grouping 2

Scell 2, Scell 3,
Scell 4

S1020

N_max Grouping 3

Scell 6, Scell 7,
Scell 8

S1030

**FIG. 10**

CC Grouping 1

Pcell, Scell 5,
Scell 1

S1110

CC Grouping 2

Scell 2, Scell 3,
Scell 4

S1120

**FIG. 11**

| Reference CC (1209) | RGB1 | RGB2 | RGB3 | RGB4 | |
|---|---|---|---|---|---|
| CC1 (1201) | RGB1 | RGB2 | RGB3 | RGB4 | RGB5 |
| CC1 (1202) | RGB1 | RGB2 | RGB3 | | |

**FIG. 12**

START

S1301

PERFORM CONNECTION ESTABLISHMENT
PROCEDURE FOR PRIMARY CELL

S1303

PERFORM CONNECTION ESTABLISHMENT
PROCEDURE FOR SECONDARY CELL

S1305

TRANSMIT DCI

S1307

TRANSMIT OR RECEIVE DATA
ON PLURALITY OF CELLS

END

# FIG. 13

**FIG. 14**

BASE STATION(1520)

TERMINAL
(1510)

FIRST CELL . . . N-TH CELL
(1522-1)        (1522-N)

S1501 — ALLOCATE RESOURCES OF FIRST CELL AND DO NOT ALLOCATE RESOURCES OF SECOND CELL

DCI[FDRA FOR SECOND CELL=all Os](S1503)

IDENTIFY THAT RESOURCES OF SECOND CELL ARE NOT ALLOCATED — S1505

DATA(S1507)

**FIG. 15**

BASE STATION(1620)

TERMINAL
(1610)

FIRST CELL . . . N-TH CELL
(1622-1)        (1622-N)

S1601 — PERFORM SCHEDULING

S1603 — GENERATE COMMON FDRA VALUE FOR ALL CELLS

DCI(S1605)

DATA(S1607)

**FIG. 16**

BASE STATION(1720)

TERMINAL
(1710)

FIRST CELL
(1722-1)

· · ·

N-TH CELL
(1722-N)

S1701 — PERFORM SCHEDULING

S1703 — GENERATE FDRA VALUE FOR REFERENCE CELL

S1705 — GENERATE DELTA VALUE FOR REMAINING CELLS

DCI(S1707)

DATA(S1709)

**FIG. 17**

BASE STATION(1820)

TERMINAL
(1810)

FIRST CELL
(1822-1)

· · ·

N-TH CELL
(1822-N)

S1801 — PERFORM SCHEDULING

S1803 — DISTRIBUTE BITS OF
FDRA FIELD TO EACH CELL

S1805 — GENERATE FDRA VALUE FOR EACH CELL

DCI(S1807)

DATA(S1809)

**FIG. 18**

## INTERNATIONAL SEARCH REPORT

| | International application No. |
|---|---|
| | **PCT/KR2023/005525** |

**A.    CLASSIFICATION OF SUBJECT MATTER**

**H04L 1/00**(2006.01)i; **H04L 5/00**(2006.01)i; **H04W 72/23**(2023.01)i; **H04W 72/04**(2009.01)i

According to International Patent Classification (IPC) or to both national classification and IPC

**B.    FIELDS SEARCHED**

Minimum documentation searched (classification system followed by classification symbols)

H04L 1/00(2006.01); H04L 5/00(2006.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 멀티 셀(multi-cell), 프라이머리 셀(primary cell), 세컨더리 셀(secondary cell), DCI(downlink control information), 주파수 도메인 자원 할당(FDRA, frequency domain resource allocation), 스케줄링 (scheduling), 델타(delta)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2021-0151551 A (SAMSUNG ELECTRONICS CO., LTD.) 14 December 2021 (2021-12-14)<br>See paragraphs [0179]-[0181], [0311], [0368], [0412]-[0423] and [0460]-[0465]; and figures 12-14. | 1-6,11-20 |
| Y | | 7-10 |
| Y | KR 10-2022-0042411 A (VIVO MOBILE COMMUNICATION CO., LTD.) 05 April 2022 (2022-04-05)<br>See paragraphs [0045]-[0050]. | 7-10 |
| X | KR 10-2021-0152663 A (SAMSUNG ELECTRONICS CO., LTD.) 16 December 2021 (2021-12-16)<br>See paragraphs [0096]-[0151]; claims 1-5; and figures 5-8. | 1,12,17-20 |
| A | WO 2020-030253 A1 (HUAWEI TECHNOLOGIES CO., LTD.) 13 February 2020 (2020-02-13)<br>See page 10, line 26-page 12, line 14; and figure 9. | 1-20 |

☑ Further documents are listed in the continuation of Box C.        ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **03 August 2023** | **03 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/005525** |

**C.    DOCUMENTS CONSIDERED TO BE RELEVANT**

| Category* | Citation of document, with indication, where appropriate, of the relevant passages | Relevant to claim No. |
|---|---|---|
| A | WO 2022-055333 A1 (SAMSUNG ELECTRONICS CO., LTD.) 17 March 2022 (2022-03-17) See paragraphs [0123]-[0136]; and figure 10. | 1-20 |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| KR | 10-2021-0151551 | A | 14 December 2021 | WO | 2021-246711 | A1 | 09 December 2021 |
| KR | 10-2022-0042411 | A | 05 April 2022 | CN | 111818646 | A | 23 October 2020 |
| | | | | CN | 111818646 | B | 24 September 2021 |
| | | | | EP | 4007408 | A1 | 01 June 2022 |
| | | | | JP | 2022-542999 | A | 07 October 2022 |
| | | | | JP | 7303373 | B2 | 04 July 2023 |
| | | | | US | 2022-0150720 | A1 | 12 May 2022 |
| | | | | WO | 2021-017948 | A1 | 04 February 2021 |
| KR | 10-2021-0152663 | A | 16 December 2021 | EP | 4149196 | A1 | 15 March 2023 |
| | | | | US | 2023-0103808 | A1 | 06 April 2023 |
| | | | | WO | 2021-251741 | A1 | 16 December 2021 |
| WO | 2020-030253 | A1 | 13 February 2020 | None | | | |
| WO | 2022-055333 | A1 | 17 March 2022 | CN | 116134934 | A | 16 May 2023 |
| | | | | EP | 4165942 | A1 | 19 April 2023 |
| | | | | KR | 10-2023-0069091 | A | 18 May 2023 |
| | | | | US | 2022-0086894 | A1 | 17 March 2022 |